# EUROPEAN PATENT APPLICATION

(11) **EP 3 091 500 A1**
(43) Date of publication of application: **09.11.2016**
(21) Application number: 14799948.6
(22) Date of filing: 02.10.2014
(51) Int. Cl.: G06Q 50/16, G06Q 30/02, G06Q 30/06

(54) **PROPERTY BROKERAGE SERVER**

(30) Priority: 31.12.2013 JP 2013273746
(71) Applicant: Machikoe Co. Ltd., Tokyo 150-0012 (JP)
(72) Inventor: KAJITANI TSUTOMU, Tokyo 150-0012 (JP)
(74) Representative: EIP
(86) International application number: PCT/JP2014/076364
(87) International publication number: WO 2015/102064

(57) **Abstract**

To solve a problem in which no information is obtained from an actual user of a facility or the like located on the periphery of a real estate. In this salon server 100, leaflets for introducing a property salon are distributed to tenants of the property so as to invite the tenants to the property salon by using the leaflets. In the property salon, the salon members are allowed to contribute opinions or the like about topics, such as cafés, schools and the like located within a predetermined range on the periphery of the property. Each salon member receives recommendations about a specific topic extracted from the logs of the other salon members. Thus, information about the topic can be received from the actual user. Since the information to be recommended is extracted based upon the profiles of the salon members, it is highly possible that the information is profitable to the corresponding salon member. Thus, the salon member can obtain actual information about facilities located on the periphery of the real estate.

## Description

### TECHNICAL FIELD

The present invention relates to a property intermediary server that forms a salon composed of persons relating to a real estate property or the like, and allows information within the salon to be sharedly used among the salon members.

### BACKGROUND ART

As a technique for supplying information relating to real estate properties, a conventional technique as disclosed in the following Patent Document 1 has been known. In this real estate peripheral information supply system relating to this Patent Document 1, in order to obtain detailed information about a specific real estate property, together with real estate properties suitable for retrieving conditions, pieces of information of peripheral facilities (such as, freeways, national roads, prefectural roads, main local roads, roads, railways, stations, bus stops, prefectural government offices, city/ward offices, town/village offices, branch offices, police stations, police boxes, police sub-stations, fire department offices, post offices, public and government offices, schools, kindergartens, nursery schools, hospitals, hotels, japanese-style hotels, banks, shrines, etc.) are displayed on a screen.

Thus, the retriever can recognizes what kinds of facilities are located on the periphery of the corresponding real estate property and is allowed to obtain materials for use in estimating the actual value of the real estate property.

### PRIOR ART DOCUMENT

### PATENT DOCUMENT

Patent Document 1: JP-A No. 2002-123589

### DISCLOSURE OF INVENTION

### PROBLEM TO BE SOLVED BY THE INVENTION

However, in the real estate peripheral information supply system described in the above-mentioned Patent Document 1, a problem arises in which, although it is possible to generally estimate the corresponding real estate property based upon various facilities and the like located on the periphery of the specific real estate property, detailed information about the facilities and evaluations made by the actual users cannot be obtained. Moreover, it is not possible to obtain opinions of others who have a common sense of value. For example, those who like "café" want information from those "café" lovers like themselves, and are not satisfied with general information. The present invention has been devised to solve such problems.

### MEANS OF SOLVING THE PROBLEM

Therefore, the property intermediary server of the present invention is characterized by providing a property registering unit in which the ex-tenant who leaves a property registers the corresponding property, a movable property registering unit in which movable properties, such as furniture, electric appliances, and the like belonging to the registered property are registered, and a mail transmitting/receiving unit for use in getting in touch with a person planning to move into the property about the property or the like registered in the property registering unit.

Moreover, in the above-mentioned invention, the property intermediary server of the present invention is further provided with a salon forming unit for forming a salon composed of the tenants who have the common property profile or topics based upon the property profile or topics, a log acquiring unit that acquires a log from a client of a salon member who is one of the tenants, and the movable property information registering unit is characterized in that the registered contents of the movable property are published to the salon members of the salon to which the tenant belongs.

Moreover, in the above-mentioned invention, the property intermediary server of the present invention is characterized in that after a lapse of a predetermined period, the movable property information registering unit publishes the registered contents of the movable properties to the salon members of other properties.

Furthermore, in the above-mentioned invention, the property intermediary server of the present invention is further characterized in that the movable property information registering unit alters the prices of the movable properties for each predetermined period.

### BRIEF DESCRIPTION OF DRAWINGS

[Fig. 1] Fig. 1 is a block diagram depicting a salon server in accordance with an embodiment of the present invention.
[Fig. 2] Fig. 2 is an explanatory drawing that depicts one example of a leaflet automatically generated.
[Fig. 3] Fig. 3 is an explanatory drawing that depicts an example for use in explaining operations of a salon registering unit.
[Fig. 4] Fig. 4 is a flow chart that depicts operations of the salon registering unit.
[Fig. 5] Fig. 5 is a conceptual drawing that depicts a configuration of the salon.
[Fig. 6] Fig. 6 is an explanatory drawing of an example of contents displayed on each of individual screens of salon members.
[Fig. 7] Fig. 7 is an explanatory drawing that depicts a concept of a coupling of salons.
[Fig. 8] Fig. 8 is an explanatory drawing that depicts a concept of a coupling of salons along railway line.
[Fig. 9] Fig. 9 is an explanatory drawing that depicts an example of a posting service.
[Fig. 10] Fig. 10 is a block diagram depicting a salon server in accordance with the embodiment of the present invention.
[Fig. 11] Fig. 11 is a conceptual drawing depicting a model realized by the salon server shown in Fig. 10.
[Fig. 12] Fig. 12 is an explanatory drawing that depicts an example of a movable property list.
[Fig. 13] Fig. 13 is a flow chart for apartment house sales.

### BEST MODES FOR CARRYING OUT THE INVENTION

A salon server 100 of the present invention, which is a server composed of a combination of a predetermined program and hardware, is constituted by a salon registering unit 101, a salon managing unit 102, a salon marketing unit 103 and a server managing unit 104. In the following description, all the processing operations are supposed to be executed by the salon server 100 unless otherwise indicated. The salon is a member's salon composed of tenants of condominiums, apartment houses, apartment complexes, in-town members, and the like, and inside the salon, various pieces of life information are exchanged. The information inside the salon is shared by the salon members on principle, and based upon information of the other salon members, each salon member can receive various recommendations from the salon server 100. The salon server 100 is connected to an external computer through the Internet. Moreover, the salon server 100 is connected to an input unit 105 such as a keyboard, and a screen display unit 106. Additionally, the salon server 100 may have a mode provided as a so-called cloud service, constituted by sources on the Internet.

### [Salon Registering Unit]

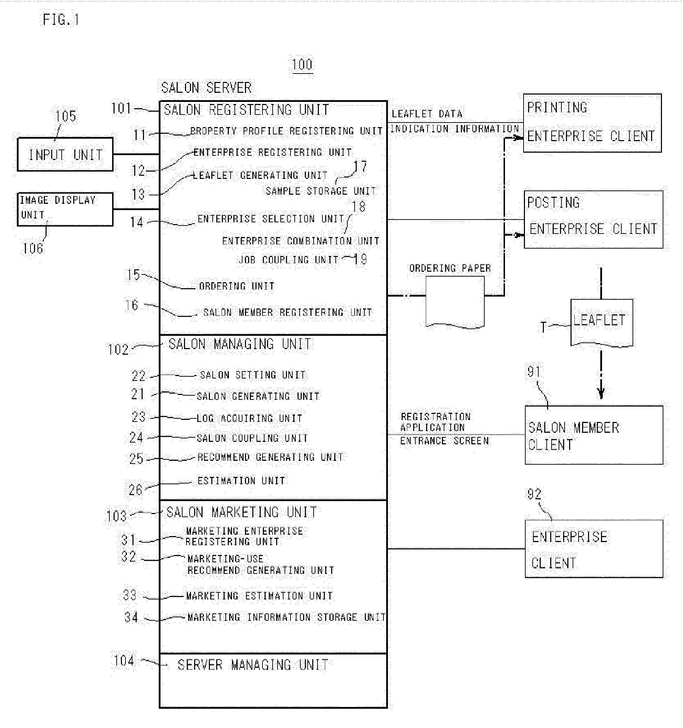

Fig. 1 is a block diagram depicting a salon server in accordance with one embodiment of the present invention. The salon registering unit 101 is constituted by a property profile registering unit 11 that registers property profiles forming basic information for the salon generation, a business enterprises registering unit 12 for registering posting enterprises, printing enterprises, removers, reforming companies and the like, a leaflet generating unit 13 for generating a leaflet to be posted in a property, an enterprise selection unit 14 for making selections among registered enterprises, an ordering unit 15 for placing an order for printing leaflets or for posting them, and a salon member registering unit 16 for registering a tenant who has made a joining application as a salon member. These property profile registering unit 11, enterprises registering unit 12, leaflet generating unit 13, enterprise selection unit 14, ordering unit 15 and salon member registering unit 16 are configured by assembling programs or the like for use in functioning these units into a hardware device in a computer.

The property profile registering unit 11 registers property profiles of specific properties, such as condominiums, apartment houses, and the like. The property profiles correspond to basic information for real estate properties, such as, for example, addresses, structures, ages, rents, room layouts, additional facilities, reform history, and the like.

The enterprises registering unit 12 registers basic information, such as company names, addresses, posting areas, charges, number of postings available, available time and day, and the like, of posting enterprises. Moreover, it also registers basic information, such as company names, addresses, printed object delivering areas, charges, number of printed objects available, available time and day for delivery, and the like, of printing companies. The registering process of enterprises may be carried out by an enterprise through a registering screen of the salon server 100, or may be executed by a system administrator through the input unit 105. The posting area and the printed object delivery area may be registered on a city/town/village basis, or on a town-name basis in more detail.

The registering process of property profiles is carried out the system administrator by using the input unit 105 or the like. Additionally, the inputting method of property profiles is not limited by this, and for example, a real estate company whose access is permitted by the salon server 100 may input them through an input screen for property profiles. Moreover, in the case when detailed profiles for each of tenants of residences can be acquired, the corresponding detailed profiles are also inputted. The detailed profiles include, for example, the name, gender, age, family structure, workplace, male address, entering start time, and the like of each of the tenants.

The leaflet generating unit 13 stores a large number of sample data of leaflets in a sample storage unit 17. After the property profiles have been inputted, the system administrator selects a sample of a necessary leaflet. Alternatively, the leaflet generating unit 13 automatically makes a selection among the samples stored in the sample storage unit 17. The leaflet generating unit 13 to which property profiles have been inputted automatically generates a leaflet directed to the newly registered property.

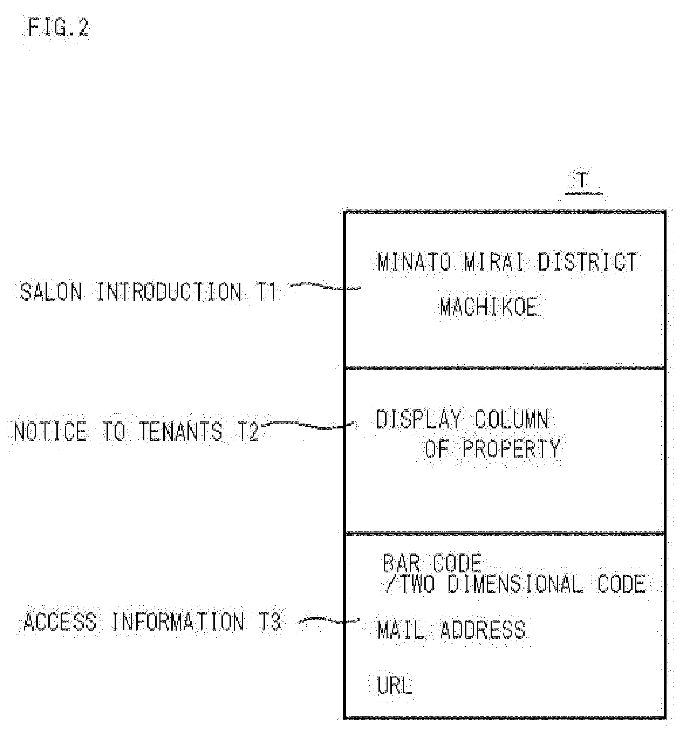

Fig. 2 is an explanatory view depicting one example of a leaflet to be automatically generated. On the leaflet T, a salon introduction T1, a notice T2 to a tenant of a property, and access information T3, such as a two-dimensional code, an empty mail address, a URL, etc. for use in directing to a registration screen of the salon, are described. The access information T3 is automatically generated by the leaflet generating unit 13 as information inherent to the corresponding property. Therefore, when a tenant accesses to the salon server 100 based upon the information including the two-dimensional code, empty mail address, URL and the like, the introduction screen to the property salon of the corresponding property is directly displayed on the client of each tenant.

The enterprise selection unit 14 selects a posting enterprise and a printing enterprise based upon the address of the property profile. The enterprise selection unit 14 is provided with an enterprise combination unit 18 and a job coupling unit 19. The enterprise combination unit 18 automatically generates combinations of the posting enterprise and the printing enterprise. For example, in order to increase the product-delivery speed, a combination is made with a posting enterprise to which the order is given and the nearest printing enterprise. Moreover, in the case when emphasis is put on costs, a combination is made with the posting enterprise having the cheapest cost and the printing enterprise having the cheapest cost.

The salon member registering unit 16 registers the tenant who has accepted to become a member of the salon. The system administrator confirms the contents of the application of the tenant, and issues an acceptance to the salon member registering unit 16, thereby completing the member registration. For example, when the system administrator gives an acceptance instruction to the salon member registering unit 16 by pressing an acceptance button displayed on the screen display unit 106, the salon member registering unit 16 carries out the member registration. Moreover, the corresponding acceptance process may be automatically carried out inside the salon server 100. Furthermore, by distributing a temporary ID and a temporary password to the tenant, the tenant in question may display an entrance screen of the salon by using his or her computer and log-in thereto by using the temporary ID and temporary password so that a predetermined member registration can be carried out. In this case, by regarding the log-in by the temporary ID and temporary password as an acceptance to become the salon member, the salon member registering unit 16 carries out the member registration.

Additionally, the registration to the salon member may be carried out by a method other than the leaflet. From a wireless terminal for a wireless communication service preliminarily installed in a property, information is directly transmitted to a computer of a tenant so as to display the entrance screen to the salon, and through this entrance screen, a joining procedure to the salon may be executed. Additionally, in the case when a salon member is left from the corresponding property or the like, the salon member registering unit 16 also carries out a registration deleting process for leaving the salon. In this procedure, the salon member in question carries out an operation through his or her own managing screen so as to give an instruction to the salon member registration unit 16 so that a leaving procedure is executed. Alternatively, under specific conditions, the administrator gives an instruction for a leaving procedure to the salon member registering unit 16 through an operation from the managing screen of the specific salon member.

Moreover, the salon server 100 may cooperate with a basic system of a managing company (not shown in Figs.). The basic system corresponds to, for example, a system for carrying out information managements or the like of customers inside the firm of the managing company. The corresponding customer is a tenant, and the customer information is sometimes altered depending on the current status of the tenant. For example, the workplace of the tenant is altered, the number of the tenants is altered, or the like. These pieces of information are inputted to the basic system of the managing company, and by allowing the basic system to cooperate with the salon server 100, the information of the tenant relating to the alternation can be automatically updated. The update is automatically carried out by the salon member registering unit 16. With this configuration, since the information registered in the salon server 100 needs not be updated separately from the basic system, time-consuming processes can be reduced. Moreover, since the salon server 100 is operated based upon the newest status of the tenant, the optimal service is supplied to the tenant.

Moreover, so as to automatically reflect information of the salon member to the salon server 100 upon registration to the salon, the salon server 100 may be cooperated with the basic system. For example, suppose that the basic system stores basic information of properties with the detailed information thereof and predetermined tenants, and that these pieces of information are not stored in the salon server 100. At this time, it is supposed that when a certain tenant carries out a registering process to the salon, the salon server 100 acquires the information of the corresponding property and the information of the corresponding tenant from the basic system, and automatically registers the tenant in the salon registering unit. With this configuration, the inputting job at the time of registering to the salon can be simplified. Moreover, since the information of a property inputted for the business purpose, as it is, can be utilized, more detailed information of properties is registered in the salon registering unit 100; thus, this configuration is really effective to the management of the salon.

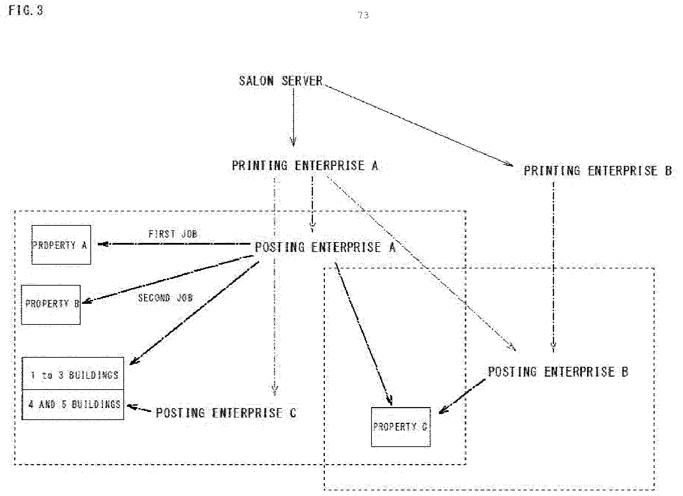

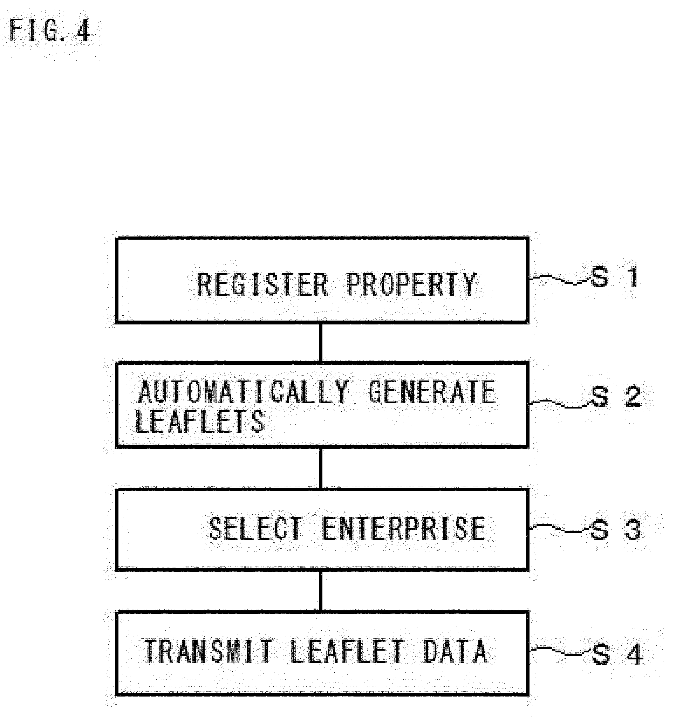

Fig. 3 is an explanatory view depicting an example for explaining the operations of the salon registering unit. Fig. 4 is a flow chart showing operations of the salon registering unit. When a new property is registered in a property profile registering unit 11 (step S1), the salon registering unit 11 automatically generates a leaflet directed to a tenant for the property based upon the registered property profile by the leaflet generating unit 13 (step S2). As shown in the example of Fig. 2, on the leaflet T automatically generated, at least the salon introduction T1 and the notice T2 to the tenant are displayed. Moreover, the access information T3 composed of a URL, a two-dimensional code and an empty mail address for directing to the entrance screen of the salon registration, is also displayed thereon. Any of these items are automatically generated exclusively to the corresponding property, and in the case when a tenant views the entrance screen of the salon registration based upon the access information T3, the basic profile of the property is brought into an already displayed state. The leaflet T automatically generated is stored in the salon registering unit 101 by using a predetermined format.

In the case when emphasis is put on the speed, the enterprise selection unit 14 selects a posting enterprise closest to the address of the property and a printing enterprise closest to the posting enterprise (step S3). This optimal combination is automatically formed in the enterprise combination unit 18. Alternatively, this combination may be inputted by the system administrator.

Next, the above-mentioned leaflet data are transmitted to the selected posting enterprise and printing enterprise by the ordering unit 15 (step S4). In the case when the posting enterprise compatibly serves as a printing enterprise, the leaflet data are transmitted to the posting enterprise. As the transmitting method, the data are transmitted as an attached file to the mail address preliminarily registered in the enterprise registering unit 12. Alternatively, a downloading-use URL may be transmitted to the mail address, and the posting enterprise downloads and acquires the data.

The mail at the time of placing orders includes instruction information including the address of the property to which the posting process is carried out and the number of deliveries, and the like. The posting enterprise receives the leaflets T printed by the printing enterprise or prints the leaflets in its own enterprise, and carries out postings with respect to the corresponding property in accordance with the instruction information. Thus, the postings can be carried out efficiently without losses. Moreover, by selecting the nearest posting enterprise from the property, the postings can be carried out at high speeds.

Moreover, in the case when the number of the leaflets to be posted is small, the work efficiency of the posting enterprise is lowered. Since the work efficiency is bad, the posting charge is raised, and this state is not preferable for the system administrator. For this reason, the job coupling unit 19 couples posting jobs of a plurality of leaflets to each other so as to increase the number of leaflets to be posted. For example, as shown in Fig. 3, it consigns a first job directed to property A and a second job directed to property B collectively to a single posting enterprise A. Thus, the number of postings resulting from one consignment is increased so that the posting enterprise A is allowed to carry out efficient managements. The system administrator can carry out postings at low costs by utilizing volume discounting.

Moreover, the posting enterprise may register the minimum posting number in the enterprise registering unit 12. In this case, the job coupling unit 19 collects jobs until the total posting number has reached a predetermined number, and when the predetermined number has been reached, gives an instruction to the ordering unit 15 so as to collectively consign a job to the posting enterprise. Delivery-date information for posting is added to each of the jobs, and stored in the leaflet generating unit 13. The job coupling unit 19 couples a plurality of jobs to one another within a range in which the delivery date of posting can be kept, and collectively consigns the jobs to the posting enterprise.

Moreover, in the case when the number of the postings is great or when there are a plurality of properties forming posting destinations, with those properties being widely apart from one another, if the job is consigned to one posting enterprise, the posting job might become inefficient. In the case when postings are carried out on a plurality of properties, the enterprise combination unit 18 respectively selects posting enterprises (in the Fig., posting enterprise A and posting enterprise B) that are close to each of the properties, and consigns the job to these posting enterprises A and B in combination with a printing enterprise A. Then, the posting enterprise A carries out postings of leaflets onto the property A and the posting enterprise B carries out postings of leaflets onto the property C. Thus, even in the case of properties far apart from one another, the leaflets can be delivered efficiently.

Moreover, there is an upper limit of the number of postings depending on the capability of the posting enterprises, such as the number of members or the like thereof. In the case when an order is placed, with the number of postings being exceeded, the enterprise selection unit 14 selects a plurality of posting enterprises, and consigns the posting job of the same leaflets to them. At this time, the plural posting enterprises are preferentially selected from the posting enterprise closest to the corresponding property or posting area. Moreover, the ordering unit 15 assigns properties or posting areas for each of the posting enterprises, and gives instructions thereto by mails at the time of giving orders. For example, in the case when an attempt is made to quickly carry out postings to a specific large-scale apartment complex, the enterprise selection unit 14 makes selections in the order of the posting enterprise closest to this property, and consigns posting jobs in a divided manner to the respective posting enterprises A and B. In the case when the apartment complex is composed of five buildings in total, it consigns postings onto first and second buildings to the posting enterprise A, and also consigns postings onto the third, fourth and fifth buildings to a posting enterprise C. The way how to assign the jobs can be carried out based upon information of capabilities or the like of the registered posting enterprises.

Moreover, in the case when the property profile registering unit 11 has already acquired detailed profiles of the tenants, the posting job can be carried out for each of the individual residences. In this case, to the mail at the time of ordering, a list of posting destinations (room numbers of a property) is automatically generated and attached.

The enterprise selection unit 14 is provided with passage permission means (not shown) for giving a one-time password or a temporary authentication key that allows the posting enterprise to pass the door of an apartment house. Additionally, the passage permission means is limited only in the case when the security system of a property has a function for giving a one-time password or a temporary authentication key. The one-time password and temporary authentication key are effective only at the time of posting, and the ordering unit 15 transmits these to the posting enterprise by a mail upon giving an order thereto. When the posting enterprise opens the entrance of an apartment house once or a predetermined number of times, the corresponding one-time password and the temporary authentication key become invalid. The corresponding one-time password and temporary authentication key are preliminarily supplied from a real estate agent as property profiles and stored in the property profile registering unit 11. With this configuration, even in the case when a special item that cannot be put into a post is delivered, the posting enterprise is allowed to access to the door of each of the residences, and since after the posting, the accessing is no longer available, both of the convenience and security can be satisfied.

After the above-mentioned posting, by viewing the posted leaflet T, a tenant of the property accesses to the entrance screen of the salon server 100 by using the access information T3, such as a two-dimensional code, a URL, an empty mail or the like. By confirming the purpose and contents of the salon on the screen, the tenant determines whether or not he or she becomes a salon member. By inputting predetermined items on the entrance screen, the tenant transmits information for a registration application to the salon member registering unit 16. The system administrator confirms the inputted contents of the corresponding registration application, and admits them so that the registration is completed. More specifically, by pressing an admittance button or the like of the screen display unit 106, an admittance instruction is issued to the salon member registering unit 16 so that the salon member registering unit 16 carries out a member registration. Detailed profiles, such as the name, age or the like of the salon members, are registered in the salon member registering unit 16 together with the property profiles.

### [Salon Managing Unit]

As shown in Fig. 1, the salon managing unit 102 of the salon server 100 is provided with a salon generating unit 21 for generating a specific salon, a salon setting unit 22 for setting the contents of a salon to be generated, a log acquiring unit 23 for acquiring a log of a salon member, a salon coupling unit 24 for use in coupling salons to one another, and a recommend generating unit 25 for giving a recommend to salon members based upon information within the salon. The salon generating unit 21, the salon setting unit 22, the log acquiring unit 23, the salon coupling unit 24 and the recommend regenerating unit 25 are configured by assembling programs and the like for functioning these units in hardware devices in a computer. The following explanation will be given by exemplifying an apartment house property.

The salon setting unit 22 sets a basic configuration of a salon. The setting items include conditions of a tenant capable of joining to the salon, conditions or the like of topics to be discussed in the salon. For example, those who capable of joining to the salon are limited to tenants of a specific property. Moreover, the topics are limited to topic information of shops or the like located within 1 km in a radius from the property. The area of the salon is desirably set to an optimal range depending on the population and the number of topics. Furthermore, the center of the area diameter may be set to the corresponding property, or to the closest station from the property.

When a plurality of tenants have been registered by the salon member registering unit 16 as the members, the salon generating unit 21 forms a salon. A salon that is generated when a property profile is first registered forms a property saloon. This property salon is generated based upon the "address" of the property profile. That is, the salon is composed of residents of the same place, and information and the like obtained by the residents during the daily life form topics of the corresponding property salon.

The log acquiring unit 23 acquires all the logs including word-to-mouth information and information such as contributed opinions or the like, supplied by a salon member through his or her client 91, information that gives a certain evaluation on a topic, such as an evaluation of "good", browsing history, etc. Additionally, it is during a state where a salon member is accessing to the corresponding salon server 100 from his or her client 91 that the salon server 100 can acquire all the logs of the salon member. Additionally, the corresponding client 91 may be any device through which the salon member is logging in by using his or her own ID, and is not limited by a device possessed by the salon member.

Moreover, the log acquiring unit 23 acquires browsing history and retrieving history of Web sites from the client 91 of a salon member under the consent of the salon member. When a person becomes the salon member, the person is allowed to download a predetermined program from the server managing unit 104, and the corresponding program is activated on the client 91 of the member. By acquiring the history of the salon member within a required range through this program, the corresponding log-in information is transmitted to the salon server 100 through the network, and stored in the log acquiring unit 23.

By transmitting information within the salon to the client 91 of a salon member, the recommend generating unit 25 gives a recommendation to the corresponding salon member. The recommended information includes, for example, topics, such as cafes, nursery facilities, electric appliances, restaurants, wines, recycling items, part time jobs, etc., and individual topic information included in each of the topics. Moreover, the town itself related to these topics also forms recommendation information. Pieces of information to be recommended are selected based upon logs accumulated as described above. For example, those topics highly recommended by the salon members are extracted and selected by the recommend generating unit 25.

Moreover, the recommend generating unit 25 extracts salon members who have high commonality of topics with the salon member whose recommendation is displayed. Since the property salon has basically the same property address, the family structure, gender, age and the like, which are other profiles that tend to show high commonality, are used as main criteria factors.

For example, to a salon member who has a small child, the recommend generating unit 25 recommends information relating to a nursery facility. At this time, suppose that the corresponding salon member has no log showing the access to the nursery facility. On the other hand, suppose that another salon member has been to the corresponding nursery facility and has contributed mouth-to-word information about the nursery facility in the salon. Moreover, suppose that the other salon member also gives a predetermined evaluation, such as "good" or the like. Under this state, the recommend generating unit 25 extracts nursery facilities relating to contributed information and mouth-to-word information given by the other salon members, and gives recommendations of the corresponding nursery facilities to the salon member who has a small child. In the recommendation, a display of "recommended by another member" is given to any one of the screens. If there are photos thereof, the photos are displayed in combination. If there are evaluations and comments by other members, some of them are displayed. The salon member who has noticed the corresponding nursery facilities by this display views a page in the salon that shows topics of the corresponding nursery facilities.

The salon server 100 may give a recommendation to a salon member of another property salon. For example, the property profile always includes a room layout. In the case of a large-scale complex houses, rooms for families, as well as rooms for a single person, are included in a mixed manner. For this reason, the recommend generating unit 25 extracts those salon members each of whom is supposed to be a single person, and gives a recommendation of electric appliances purchased by another salon member who is also a single person to this salon member. The salon member who has received the recommendation views a page that shows topics of the corresponding electric appliances. Additionally, the extraction of the salon members may be carried out by adopting a conventionally known extraction method, such as text mining or the like.

Moreover, the recommendation may be given to salon members by taking into consideration a transition of needs in the future. In the salon member registering unit 16 of the salon server 100, the moving-out history or the like of the salon members in the past is accumulated. Information about from which property a newly joined salon member has been moved may sometimes be registered as the detailed profile. Based upon these pieces of information, to a salon member of another property salon having similar profiles in the family structure, the marriage history or the like, information of the corresponding property is recommended.

Moreover, in the case when there are no alternations in a property profile, it is estimated that the resident has lived therein for a long period of time and the satisfying degree of the tenant is very high. For this reason, the recommend generating unit 25 recommends the corresponding property widely to salon members of another property salon.

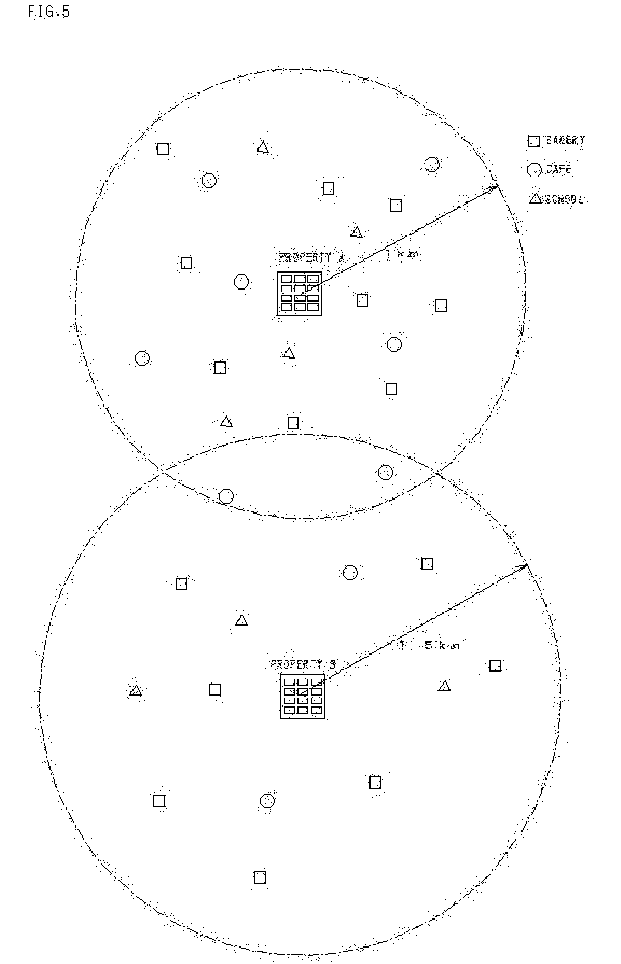

Fig. 5 is a conceptual view showing a salon configuration. Supposing that the salon has a region-related concept, the property in which the salon members are living is located in the center, and topics that are displayed on a bulletin board in the salon by the salon members are within a predetermined distance from the property. For example, in a salon relating to a property A, with respect to a plurality of topics within a radius of 1 km centered on the property A, logs of contributed information inside the salon and evaluations about the contributed information and the like are accumulated. With respect to the property A, suppose that in the Fig., triangular marks represent "schools", square marks represent "bakery shops" and round marks represent "cafes". Since the property A is located in a city area comparatively, there are many topics located on the periphery thereof. Additionally, the above-mentioned predetermined distance is variable depending on its local characteristics. For example, between city areas and mountainous areas, the above-mentioned predetermined processes are set in greatly different manner.

A property B is located at a place 2 km apart from the property A. In this case, with respect to a plurality of topics within a radius of 1 km centered on the property B, logs of contributed information inside the salon and evaluations about the contributed information and the like are accumulated. Since the property B is slightly apart from the city area, there are less topics in number than those of the property A. For this reason, the area of the property B is set to be wider than the area of the property A.

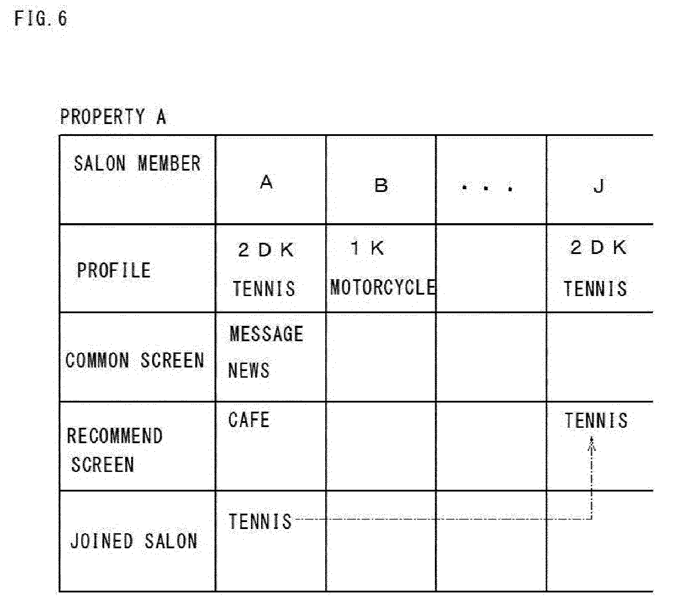

Fig. 6 is an explanatory view showing an example of the contents displayed on the screen of each of the salon members. With respect to the property A, a salon member A is a tenant of 2LDK in the property A. Those items to be displayed commonly to the salon members are newest topics, messages and news inside the apartment house, etc. Next, on a recommend screen, recommendations generated by the recommend generating unit 25 for the salon member A are displayed. In the case of displaying a plurality thereof, the newest recommendation is displayed on the uppermost portion. These recommendations may be freely set so as to alter the order or so as not to be displayed from now on. The hobbies of the salon member A are registered in the detailed profile. When there is a topic of "tennis court" inside the salon, this topic of tennis court is displayed on the recommend screen. When the salon member A views the recommended topic of tennis court, the browsing history is acquired by the log acquiring unit 23, and accumulated therein.

In the same manner, a salon member B is a tenant of 1K in the property A. Those items to be displayed commonly to the salon members are newest topics, messages and news inside the apartment house, etc. Next, on a recommend screen, recommendations generated by the recommend generating unit 25 for the salon member B are displayed. In the case of displaying a plurality thereof, the newest recommendation is displayed on the uppermost portion. For example, suppose that the hobby of the salon member B and the hobby of a certain salon member are "motorcycle". The hobbies of the salon member B are registered in the detailed profile. When there is a topic of "motorcycle shop" inside the salon, this topic of motorcycle shop is displayed on the recommend screen. Moreover, the salon member B writes mouth-to-word opinions to the recommended topic, or gives an evaluation such as "good" or the like. The browsing history of the salon member B is acquired by the log acquiring unit 23, and accumulated therein.

It is estimated that those salon members having detail profiles that are mutually similar to one another have the similar life style and life plan and their hobbies and tastes are also similar to one another. The recommend generating unit 25 extracts salon members whose detail profiles are common or similar to one another, and supplies information relating to the log of one of those salon members to another salon member. The information includes hobbies, tastes, purchase history, browsing history, evaluation history, mouth-to-word history, and the like. The hobbies may be registered as the detail profile, or may be collected as one portion of histories.

For example, suppose that the hobby of the salon member A and a salon member J is "tennis". In the case when the hobby, testes, and the like of the salon members are not registered in detail profiles, those are estimated by an estimation unit, and automatically registered. Various methods are proposed as the estimation method.

For example, with respect to salon members who have common detailed profiles, the estimation unit 26 estimates hobbies, tastes and the like based upon the corresponding detail profile, and gives recommended topics. Additionally, the estimation by the estimation unit 26 may be carried out by adopting a conventionally known estimation method, such as text mining or the like (hereinafter, the same is true for the estimation function carried out by the salon server). For example, in the case when the fact that certain two persons are living in rooms provided with the same sound-proof specification is registered in detail profiles, topics relating to audio are recommended to these two persons.

Moreover, the estimation unit 26 can estimate based upon common sense derived from individual information about the salon members. For example, in the case when a woman in her thirties gives mouth-to-word opinions or the like about a cooking school, it is estimated that she is interested in supermarkets selling good food items. In this case, the recommend generating unit 25 recommends information of supermarkets forming topics within the property salon to the corresponding woman salon member. In the estimation unit 26, a program having the above-mentioned estimation logic is stored, and this can be altered by the salon administrator depending on fashions or the like.

Moreover, in the property B also, in the same manner as in the property A, the common screen is displayed on the client of each of the salon members, and topics suitable for the corresponding person are displayed on the recommend screen for each of the salon members (not shown).

As described above, since the salon server 100 automatically supplies information with which the corresponding salon member is interested, without the necessity of the input by a salon member about desired information, the member is allowed to acquire even such information as having not noticed. In the Internet, by inputting desired information, the corresponding retrieval result can be obtained; however, with respect to keywords that are not noticeable, no inputting is available so that from this point of view, this is a passive system. However, since in this salon server 100, recommendations which are estimated from the relationship with the other salon members and considered to make a salon member interested therein are given to the corresponding member, each of the saloon members is allowed to notice a new aspect of the topic in which he or she is interested.

The recommend generating unit 25 is provided with a list generating unit 27. The list generating unit 27 forms a list of topics having common items (categories) from a large number of topics collected from logs of the respective salon members. On principle, the topics to be listed are objects that are present inside the area of the property salon. More specifically, the list generating unit 27 automatically extracts those items evaluated by mouth-to-word opinions or the like of the salon members within the property salon, and classifies them into categories. For example, based upon frequently appearing keywords, such as "this nursery school", "this nursery teacher" or the like, a list of nursery facilities is formed within the property salon. Items to be carried on the list include names, places, evaluations, and the like of nursery facilities.

Next, this list relating to nursery facilities is recommended. Those salon members to whom the recommendation is given are the salon members who have children in young ages that are extracted based upon the detail file. Thus, the salon members are allowed to obtain information relating to a plurality of nursery facilities at one time, and also to obtain mouth-to-word information and the like of the respective nursery facilities. Moreover, in the case when there is no registration about children in the detail profile, salon members to whom the recommendation is given are estimated by the estimation unit 26, and the recommendation about nursery facilities is given to the corresponding salon members. For example, in the case of a couple in their twenties, it is estimated that the possibility of having a child in the near future is high, the above-mentioned recommendation about nursery facilities is given.

Moreover, the categories of the list by the list generating unit 27 are considered to include the following items.

### (1) Positional Relationship (Distance from station, property or the like)

For example: Café located within five minutes' walk from the Nihon Odori station, Nursery school within 10 minutes' walk from ABC apartment house.

### (2) User Attributes

### Family Structure

For example: To the user having a young child, nursery and child-care facilities, network retainer shops for children's clothes, etc. are recommended.

### Life Pattern

For example: Laundry shop that is open late at night or on holidays.

### (3) Active Use of Tenant Property Data

Size, Structure, Room Layout, Rent
For example: Heating appliance suitable for one room with 7.5 -tatami mat of wooden house
For example: Sofa suitable for a room layout (B-type) of ABC apartment house

### (4) Combinations of the above

For example: Restaurants for food delivery capable of carrying out a door-to-door service even for an order of less than 1000 yen at 10 o'clock or later at night on the periphery of the Nihon Odori station, and popular menus thereof among the salon members in the past.

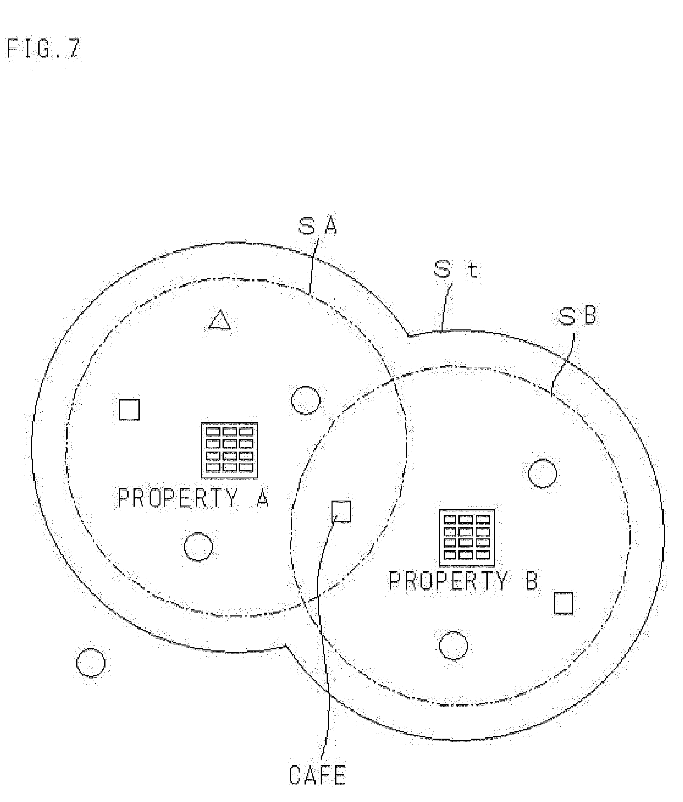

Next, the salon coupling unit 24 carries out a coupling of mutual property salons. As shown in Fig. 7, in the case when the property A and the property B are located at positions comparatively close to each other and there are common topics between the salon S A of the property A and the salon S B of the property B, that is, for example, in the case when topics about a specific café are present in both of the salon S A of the property A and the salon S B of the property B, the salon S A of the property A and the salon S B of the property B are coupled to each other based upon the topics of this café (coupled property salon St). The coupling criteria may be set for each of topics. For example, in the case of cafés, since even information including a wide range tends to be desirably viewed, if topics about one or more cafés are commonly present, the corresponding property salons are coupled with each other. On the other hand, in the case of nursery facilities, since only the neighboring area is viewed, property salons are not coupled to each other on principle.

Moreover, since salon members have information relating to themselves known to the salon members of another salon to be newly coupled, it is necessary to obtain the consent of the salon members before coupling salons. The consent of the coupling of salons may be preliminarily obtained from each of the saloon members upon joining to a property saloon and on-line transmitted to the salon coupling unit 24 and stored therein, or may be obtained in an actual meeting or the like of an administrative management association, and the consent information may be stored in the salon coupling unit 24 by the administrator of the salon server 100. Moreover, in the case of a rental property, the consent of the salon coupling may be preliminarily made among managing companies of properties whose salons might be coupled to one another, and the consent may be included in the policy of the salon of each of properties (policy needs to be agreed by the tenant upon registering the salon membership).

Moreover, property salons may be coupled to each other only for each unit of topics. For example, in the case when topics of a specific café are commonly present between the property A salon and the property B salon, the property A salon and the property B salon are coupled to each other only based upon the topics of the café. For this reason, the salon members of the property A salon can view the property B salon only about the topics of cafés; however, the salon members of the property A salon cannot view the property B salon about the other topics. Additionally, upon viewing the other property salon, information by which the corresponding person might be identified (room number of the property A or the like) may be deleted and displayed to a salon member of the property B or may be displayed in a masked manner.

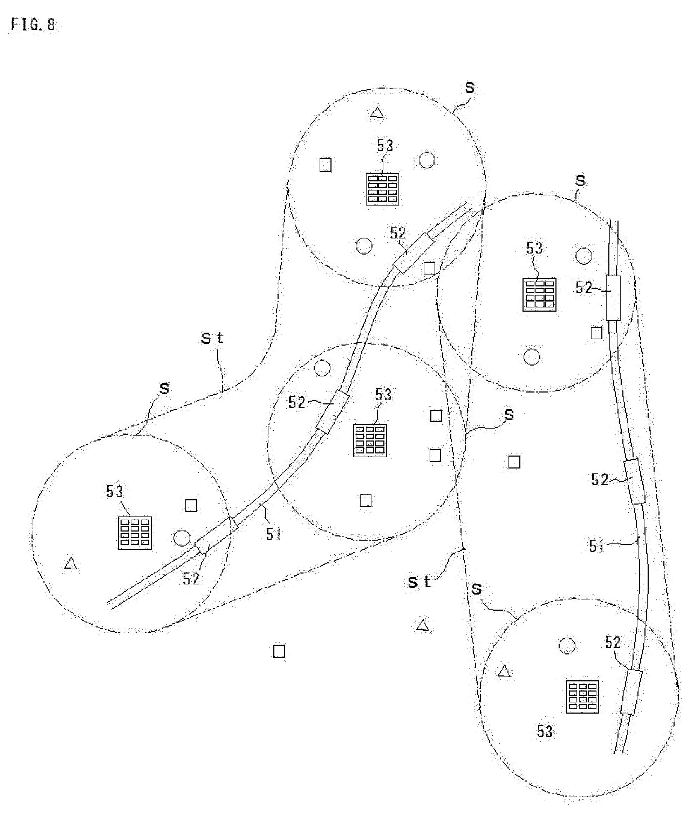

Moreover, as shown in Fig. 8, salons may be coupled to each other along a railway line. Each railway line 51 has stations 52, and many apartment houses 53 are located near each station 52. A property salon S is formed for each of the apartment houses 53, and topics are present within a predetermined radius of the property salon S. Suppose that the topic concerns cafés. It is highly possible that cafés form one of topics in almost all the property salons. Such topics are coupled to one another between property salons (coupled property salon is represented by St). The method and rule of coupling property saloons S have been described above. Since information along a railway line is important because commuter trains are used in many cases in the metropolitan area, many people can visit those cafés that form topics by coupling property salons to one another based upon railway lines as shown in Fig. 8.

On the other hand, since prefectural regions are so-called car societies, property salons may be coupled to one another along a national road. Along the national road, the commonality of topics about family restaurants and large-scale supermarkets is high among the salon members. For this reason, by coupling property salons of apartment houses along a national road by using family restaurants as the common topic, and about the corresponding topic, mouth-to-word information and viewing are freely allowed among the plural property salons.

Moreover, as another coupling mode of salons, an owner company, a managing company or the like may couple property salons of the apartment houses of the same group. Moreover, in the case of the same owner company, a plurality of properties are often built under the same concept, and the commonality of topics of the salon members as the tenants of the properties tends to be high. For example, it is highly possible that those salon members living in a designer's apartment house contribute opinions about furniture or the like having high designing characteristics. Therefore, even in the case of a plurality of apartment houses apart from one another, by mutually coupling those property salons, contributed opinions or the like inside the salons can be enhanced.

Next, the salon server 100 may provide recommendations of the city to the nationwide salon members. Information of a property salon that is set to be viewed by another salon member can be viewed by a salon member of another property salon. Suppose that a certain salon member who likes cafés sets out on a trip. This salon member can access to the salon server 100 through a portable terminal. At this time, his or her positional information is transmitted to the salon server 100 by the GPS installed in the portable terminal. Based upon the positional information, the salon server 100 detects the property salon closest to the corresponding position. Then, the recommend generating unit 25 extracts topics in which the salon member accessing through the portable terminal is interested from logs and detailed profiles of each of the corresponding salon members. In this case, the fact that the corresponding salon member likes cafés is extracted from the detailed profile or histories. Moreover, among topics included in the detected property salon, those related to cafés are extracted, and transmitted to the portable terminal of the corresponding salon member, and displayed thereon. Thus, the salon member can receive useful information from salon members registered in the nationwide property salons.

### [Salon Marketing Unit]

As shown in Fig. 1, the salon marketing unit 103 is provided with a marketing enterprise registering unit 31 that carries out a marketing process on the salon members by using the salon server 100, a marketing-use recommend generating unit 32 that gives recommendations for use in marketing to the salon members, a marketing estimation unit 33 for estimating salon members forming the targets of marketing, and a marketing information accumulation unit 34 that accumulates the contents of marketing carried out on the salon members. These units are configured by assembling predetermined programs and the like in hardware devices in a computer.

For example, the following description will explain a case in which apartment houses in a town having popular cafés are recommended. In the property salon, cafés form topics in many cases, and there are many salon members who give mouth-to-word information and contribute opinions about topics of cafés therein, and in the basic profiles of the salon members, detail profile and logs of the salon members, various pieces of life information, such as the purchased time of the property, the family structure, ages of children and the like, are included. Based upon these pieces of life information, the marketing-use recommend generating unit 32 estimates salon members who would examine to purchase a new property, and recommends the corresponding salon member another property.

With respect to the property to be recommended, since the corresponding salon member is determined as being fond of visiting cafés from the log information, those properties having many contributed opinions about cafés are extracted from other property salons. This process is carried out by the marketing-use recommend generating unit 32. These recommendations are displayed on the recommend screen of the client 91 of the salon member.

Next, the following description will explain a case on the assumption that a recommendation for purchasing a new property in a step-up manner is given to a salon member. In the case when the family member is increased or the like, the rooms currently living therein tend to become smaller, a movement tends to be considered. The time of the movement occurs in various cases when the number of living years exceeds an average of living years as the tenant, when there is a newborn baby, when a child has grown up to need a new room, and when a parent (s) needs to be taken care of, etc. The above-mentioned marketing estimation unit 33 estimates these conditions based upon the detail profiles of the salon members of the property salon or the logs thereof. Moreover, in the case when there is a specific salon member in a property salon who is estimated to move, movement histories of the corresponding salon member and a salon member having similar detail profiles and logs (regardless of whether the salon member is in the same property salon or in another property salon) to the corresponding salon member are acquired. Then, the marketing-use recommend generating unit 32 recommends a property to which the salon member having an actual moving history has moved to the salon member who is estimated to move.

In the case when there are a plurality of properties to be recommended, it is preferable to display those properties in the order from the closest to the property in which the salon member is currently living. Furthermore, in the case when a salon member has a family member who has a lot of time in staying in the property, if it is not possible to get along with tenants on the periphery, the corresponding town tends to be difficult to live. For this reason, the marketing-use recommend generating unit 32 recommends pieces of salon information that are actively viewed in the property salon of the property to be recommended to the salon member who is planning to move in. Thus, since hobbies and tastes of the tenants of the property to which he or she is planning to move can be confirmed, the corresponding salon member is allowed to obtain property information including the personal environment.

In addition to the above-mentioned arrangements, by combining the property profiles and the ages of the salon members (detail profiles), the marketing-use recommend generating unit 32 may extract couples in their forties living in a property that costs 250 thousand yen or more in rent, and may display information for a home-delivery service of high quality wine and a free-charge trial coupon ticket for a high quality esthetic salon as recommendations. Moreover, by combining the structure, room-layout, purchase history and on-line distribution service usage history included in property profiles with one another, the salon members may be limited to those salon members who are living in rooms in a range of 20 to 25 square meters and utilize an on-line distribution service of movies, the marketing-use recommend generating unit 25 may display an AV appliance list suitable for a one-room type apartment house as recommendations.

In addition to the above-mentioned arrangements, to those who are required for taking care of parents, the unit may recommend a town having sufficient hospitals and care facilities. These extraction logics may be set on demand in the salon server 100.

Moreover, suppose that the family structure of a salon member living in a specific property is unknown. In this case, when there is a salon member living in a property having a similar room layout, and the family structure of the salon member is known, the marketing-use estimation unit 33 estimates that the corresponding salon member would have the same family structure. Thus, the marketing-use recommend unit 32, for example, recommends information directed to children (for example, cram schools and a method for selecting nursery facilities) to the corresponding member.

Upon receipt of any action from the salon member to whom any recommendation is given, it is determined that the estimation has high precision, and the recommendation of predetermined information is carried out on another salon member by using the similar estimation sequence.

Moreover, an enterprise client 92 is connected to the marketing enterprise registering unit 31 by a network. The enterprise client 92 transmits predetermined information to the salon server 100 so that basic information such as a company name or the like is registered in the marketing enterprise registering unit 31. The possibility of the registration is determined by the server managing unit 104. Moreover, marketing information relating to marketing business materials is transmitted from the enterprise client 92, and accumulated in the marketing information accumulation unit 34. For example, in the case when a real estate agent carries out marketing for a new property, the enterprise client of the real estate agent 92 is connected to the salon server 100 so as to apply registration for basic information, such as the name of the real estate agent and the like. The salon server managing unit 104 determines whether the registering application is accepted or not. In the case when the registration is made as a marketing enterprise, information relating to a new property is transmitted to the marketing information accumulation unit, and accumulated therein. Thus, the corresponding real estate agent is allowed to carry out marketing activities by using the salon marketing unit 103.

As described above, since the salon marketing unit 104 carries out marketing operations by recommending optimal information to the corresponding salon member based upon profiles and logs of the salon members, it becomes possible to execute effective marketing activities.

### [Distribution of Leaflets such as Coupons]

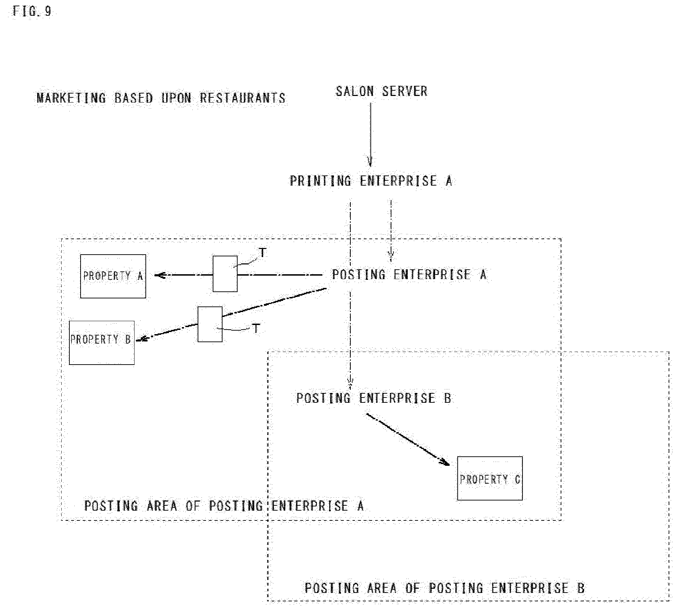

Moreover, the posting and printing system used in the above-mentioned registration of the salons may be used as a posting service for tenants of a property. Fig. 9 is an explanatory drawing that shows one example of such a posting service. Suppose that a new restaurant is opened near a specific property. In this case, the restaurant needs to send direct mails or the like to the tenants of the property so as to let them know the restaurant; however, sending direct mails indiscriminately causes much wastefulness. For this reason, the restaurant obtains a permission from the system administrator of the salon server 100, and views logs such as mouth-to-word opinions or the like in the salon, and in the case when topics relating to restaurants are present in the property salon of the corresponding property, specifies salon members who has histories of giving mouth-to-word information, contributed opinions, and the like, to those restaurants, and viewing them. This specifying process of the salon members is carried out by the salon member extracting unit 35.

The room numbers of the salon members are possessed by the server managing unit 104. Additionally, in the case when the property salons are coupled to each other based upon the topics of restaurants, salon members of the plural property salons form candidates for the posting process. When a marketing process is carried out by the salon server 100, enterprises such as restaurants, etc. need to be preliminarily examined and accepted by the system administrator, and also need to be enterprise-registered in the marketing enterprise registering unit 31. In the case of the enterprise registration, payment information, such as credit card information or the like, is inputted so as to be charged each time a posting request is made.

Moreover, in order to post leaflets to the salon members, the restaurant transmits predetermined data to the leaflet generating unit 13. The leaflet generating unit 13 assembles necessary information of the restaurant thus requested in an advertising format by the enterprise, and completes the leaflets. The data of the completed leaflets are transmitted to the posting enterprises A and B, as well as to the printing enterprise A, selected by the enterprise selecting unit 14 together with information (room numbers) of the salon members forming the posting destinations. The detail profiles such as the room numbers, names and the like of the salon members are not disclosed to the restaurant. For this reason, the salon member side can receive information of the new restaurant safely.

The printing enterprise A prints sheets of leaflets the number of which is instructed by a mail, and delivers the leaflets thus printed to the posting enterprises A and B. The posting enterprises A and B post leaflets T and coupons of the restaurant to the salon members specified by the mail. In the example of Fig. 9, the posting enterprise A carries out postings to specific salon members of the property A and property B, and the posting enterprise B carries out postings to salon members of the property C. Thus, the corresponding restaurant makes it possible to effectively post the leaflets T and coupons to the salon members who frequently eat out and know restaurants very well, and highly possibly form potential customers. More specifically, leaflets T and coupons are posted into posts of the rooms of salon members forming potential customers. Additionally, this service is charged, and upon requesting postings, the server managing unit 104 carries out a charging process in accordance with the number of postings.

Next, in the case when no topics of restaurants are present in a property salon or when logs relating to topics of restaurants are extremely small, the marketing estimation unit 33 estimates potential customers from another point of view. For example, in the case of a large-scale apartment house in which a large number of families are living, there are many rooms having different room layouts, and prices at the time of purchasing also differ greatly. In the case of posting leaflets of high class restaurants in such properties, first, those salon members living properties having high costs are extracted by estimating them as potential customers for the high class restaurant, and preferentially classified as targets for posting. After salon members have been extracted from this point of view, an order for posting is placed in the same manner as described above, and postings are carried out.

Moreover, even in the case of a restaurant at a faraway place, an effective posting job can be carried out. For example, suppose that a restaurant in Shibuya carries out a posting job to salon members of each of property salons of properties located near a Denentoshi line or a Toyoko line whose terminal station is Shibuya station. In the case when topics of restaurants (whatever restaurants may be used) are included in a property salon of a property near the Toyoko line, the salon member extracting unit 35 extracts salon members having logs, such as contributed opinions, to the corresponding topics of the property salon, and by selecting the posting enterprise and printing enterprise by using the above-mentioned sequence of processes, a posting job is carried out. Since a salon member who gives mouth-to-word opinions about specific restaurants at Jiyuugaoka highly possibly also drops in on a Shibuya restaurant, postings are carried out on the salon member giving such mouth-to-word opinions. In this manner, it is possible to efficiently carry out postings to potential customers living along a railway line.

Moreover, since the enterprise selecting unit 14 optimally selects the posting enterprise and printing enterprise located close to the property to be subjected to postings among enterprises registered in the enterprise registering unit 12, an effective posting job can be carried out even in the case when the posting job is carried out over the entire railway line, and the job can be carried out at a reasonable price. For example, upon carrying out postings on properties near the Jiyuugaoka station and Nakameguro station, the enterprise selecting unit 14 selects a printing enterprise and a posting enterprise on the periphery of the Jiyuugaoka station and also selects a printing enterprise and a posting enterprise on the periphery of the Nakameguro station so that the posting jobs are carried out by these enterprises.

Next, the following description will explain a case in which an apartment house guidance is posted by a real estate agent. Suppose that the real estate agent plans to form an apartment house provided with a sound-proof room. At this time, among property salons having topics of playing musical instruments, the real estate agent wishes to carry out postings on salon members having histories of giving contributed opinions about the corresponding topics. The room numbers of properties in which the corresponding salon members are living are possessed by the managing unit. Additionally, in the case when the property salons are coupled to each other based upon the topics of playing musical instruments, salon members of the plural property salons form candidates for the posting process.

In order to carry out postings to these salon members, the real estate agent transmits predetermined data to the leaflet generating unit 13 in the same manner as described above. The leaflet generating unit 13 assembles necessary information of the apartment house with a sound-proof room received from the real estate agent in an advertising format, and completes the leaflets. The data of the completed leaflets are transmitted to the selected posting enterprise and the printing enterprise, together with information (room numbers) of the salon members forming the posting destinations. The detail profiles such as the room numbers, names and the like of the salon members are not disclosed to the real estate agent. For this reason, the salon member side can receive information of the new apartment house safely.

Since the number of apartment houses provided with a sound-proof room are small in number, customers are considered to preferentially select an apartment house with a sound-proof room rather than a town for a comfortable life. Therefore, even when the property where the salon member who plays musical instruments and forms a candidate is living is far away from the apartment house with a sound-proof room, the leaflet of the apartment house with a sound-proof room is posted to the corresponding salon member. In this case, since the salon server 100 can select the posting enterprise and printing enterprise close to each of the properties, the posting job for the respective properties can be carried out effectively at reasonable costs.

Next, in order to transmit details of the apartment house provided with a sound-proof room to potential customers, a URL and a two-dimensional code directed to a home page showing the detailed description of the apartment house provided with a sound-proof room are shown on the leaflet. Thus, it becomes possible to introduce potential customers to the property introduction home page or the like of the corresponding real estate agent. The corresponding charge to the real estate agent may be collected each time the posting job is carried out, or may be collected at the time of entering the contract of a property.

Moreover, a salon member himself or herself may carry out a posting job. The sequence of operations or the like is the same as that of the above-mentioned restaurant and the real estate agent. For example, the salon member can carry out the posting job in the above-mentioned sequence of operations so as to post leaflets about a year-end party among the salon members, sales of disused articles, or the like.

Furthermore, the salon server 100 may be provided with a news automatically distribution unit (not shown). This news automatically distribution unit crawls external Web sites and automatically extract news about the area to which the property belongs from the information, and further analyzes the contents so that the information as a result of the analysis may be supplied to the salon members. For example, the news automatically distribution unit extracts information relating to places located within a radius of 3 kilometers from the address of the property (in the case when address information is described in the Web site or names of known stores or the like are described within the corresponding radius, the information thereof) through analyses so that the URL's, metatags and the like containing the corresponding information are distributed to the salon members of all the salons belonging to the corresponding property as mails, or as news to be displayed on the screen of the salon within the corresponding salon.

At this time, by taking into consideration topics in the salon, the news automatically distribution unit may distribute the information only to salon members of a specific salon. For example, in the case when there is a salon relating to raising children, the news automatically distribution unit distributes only news including keywords relating to raising children to the salon members of the corresponding salon. With this configuration, by registering in a salon, the salon member can proactively collect interesting information not only from the other salon members, but also from the outside.

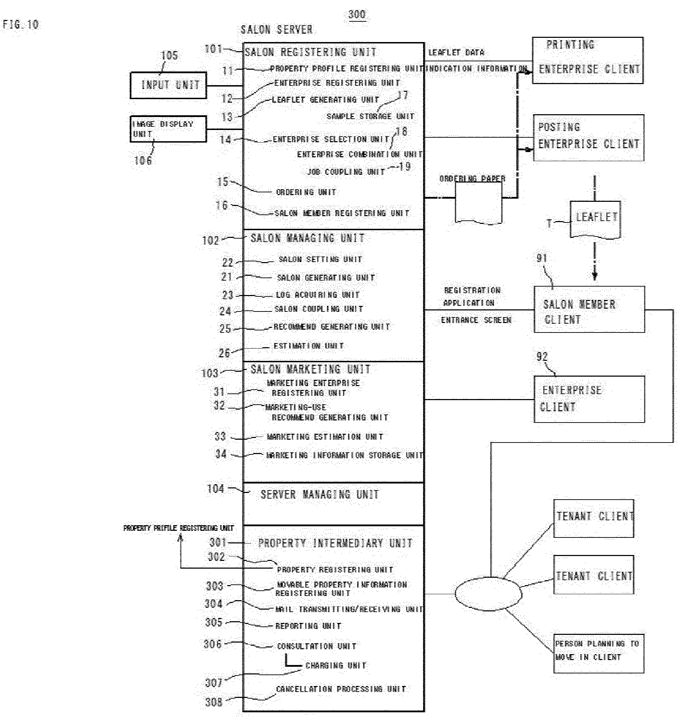

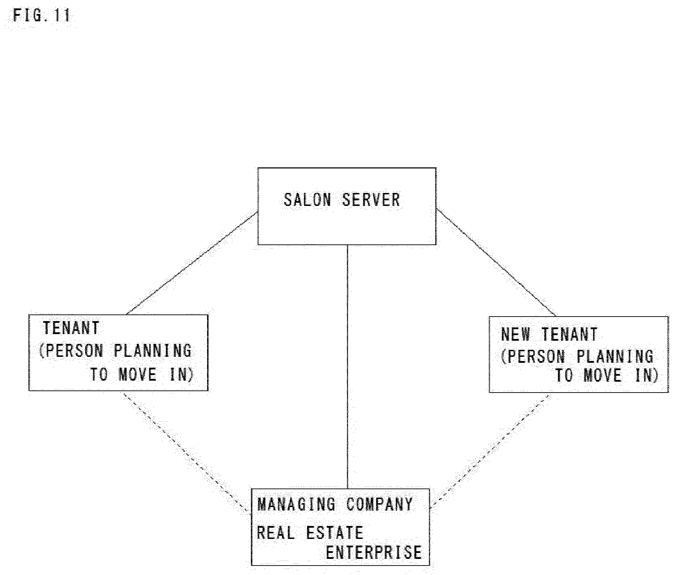

Fig. 10 is a block diagram showing a salon server in accordance with one embodiment of the present invention. Fig. 11 is a conceptual drawing that shows a model to be realized by the salon server shown in Fig. 10. As shown in Fig. 11, the business model to be realized by this salon server provides a method in which the existing tenant introduces amenity or the like of the corresponding property to a person planning to move into the property, and also transfers movable properties existing in the property (beds, sofas, closets, televisions, air conditioners, etc.) to the person planning to move in. That is, the existing tenant transfers the property to the person planning to move thereto in a "so-called with its stock and goodwill" state. Moreover, the existing tenant and the person planning to move thereto are allowed to negotiate the transfer or rental state by exchanging mails therebetween. Moreover, at the time when an agreement formation has been made on basic items (price of the property, the date of transfer, selling/buying objects of movable properties, etc.), information about the agreement formation is reported to the managing company of the property and the real estate company that deals with the property. The managing company or the like carries out complicated businesses dealt by specialists, such as the transfer registration, management contract, etc. of the property. Thus, the tenant can find an appropriate person planning to move into the property by advertising the property by himself or herself, and since the corresponding persons can reduce a real estate intermediary fee, it becomes possible to sell or rent the property reasonably. Additionally, the managing company may be the same as the administrator of the salon server or may be different therefrom.

Moreover, by being linked with the basic functions of the salon server, live information of the property can be transmitted to the person planning to move thereto. The person planning to move into the property can acquire such information as would not be obtained without actually living therein. Furthermore, after moving therein, since the person becomes a salon member of the salon of the corresponding property, he or she is allowed to receive various recommendations.

As a configuration for realizing this business model, a salon server 300 is characterized by having a property intermediary unit 301 further formed in the salon server 100. Since the other structures are the same as those described above, the description thereof will be omitted, with the same structural elements being indicated by the same reference numerals. The property intermediary unit 301 of the salon server 300 is provided with a property registering unit 302 in which the tenant (ex-tenant) of the property registers the corresponding property, a movable property information registering unit 303 in which movable properties belonging to the registered property (furniture, electric appliances, etc.) are registered, a mail transmitting/ receiving unit 304 for use in making a contact with the person planning to move in about the property or the like registered in the property registering unit 302, and a reporting unit 305 for use in reporting to the managing company at a stage or the like in which, for example, an agreement has been made with the person planning to move into the property.

The property registering unit 302 registers a property which the tenant tries to sell or from which the tenant moves. The tenant freely accesses to the salon server so as to allow the client of the tenant to display the screen of the property registering unit 302. The tenant inputs detailed profiles of the property from the registering screen. The property profiles include, for example, basic information for real estate properties, such as addresses, structures, ages, rents, roomlayouts, additional facilities, reform history, etc. of the properties. These are the same as those pieces of information required for registering in the aforementioned property profile registering unit 11.

When the property profiles are registered, the person planning to move into the property can view them from his or her client accessing to the property intermediary unit 301. The person planning to move refers to a person who finds the corresponding property by using any of retrieving means or the like and views the information of the corresponding property. In the case when the corresponding property is a property that has already been registered in the property profile registering unit 11, the property registering unit 302 is designed such that, when a tenant (salon member) logs therein by the ID and presses an automatic registering button displayed on his or her own page, the corresponding property can be automatically registered in the property registering unit 302. On the other hand, in the case when the corresponding property has not been registered in the property profile registering unit 11, it displays a button for urging the registration of the property in the property profile registering unit 11 on the display screen of the client. When the tenant has determined to carry out the registration in the property profile registering unit 11, the corresponding property is registered in the property profile registering unit 11 in accordance with the sequence of the above-mentioned embodiment, leaflets are generated in accordance with the sequence of the above-mentioned embodiment and distributed to the tenants of the property (thereafter, the same sequence of processes as that of the above-mentioned embodiment is carried out).

Moreover, even when the tenant does not register the corresponding property in the property profile registering unit 11, he or she can utilize the property intermediary unit 301. In this case, the salon information does not serve as information relating to the corresponding property. However, in order to allow a person planning to move into the property to actually evaluate the property, since live information from the salon members of the property salon is important, it is desirable for the tenants to register properties for sale or the like in the salon registering unit 101.

Furthermore, the property registering unit 302 has a function for registering photographs, architectural information and the like of the corresponding property in detail. For example, a large number of photographs and motion pictures can be registered in the property registering unit 302. Moreover, a comment input unit is also installed therein. In this comment input unit, amenity of the property and neighborhood information or the like of the corresponding property can be freely put and displayed. These photographs, motion pictures and comments can be freely viewed by a person planning to move into the property.

The movable property information registering unit 303 registers movable properties belonging to the registered properties. The movable properties include all the movable properties relating to the registered properties, such as furniture, electric appliances, facilities, equipment, storerooms, etc. The movable properties refer to properties other than real estate properties. Moreover, in the case of store properties, intangible properties, such as trademark rights or the like, are also included therein. The tenant registers his or her disused movable properties or movable properties to be desirably sold in the movable property information registering unit 303.

On the registering screen displayed on the client of the tenant, columns for use in inputting photographs of movable properties, basic information (such as trade name, production year, or the like), state, etc. thereto are displayed. Moreover, a price can be added to each of the movable properties. The information relating to these movable properties is generated by the movable property information registering unit 303 as a list, and the information is supplied to the client of the person planning to move into the property, and displayed on his or her client as the movable properties list.

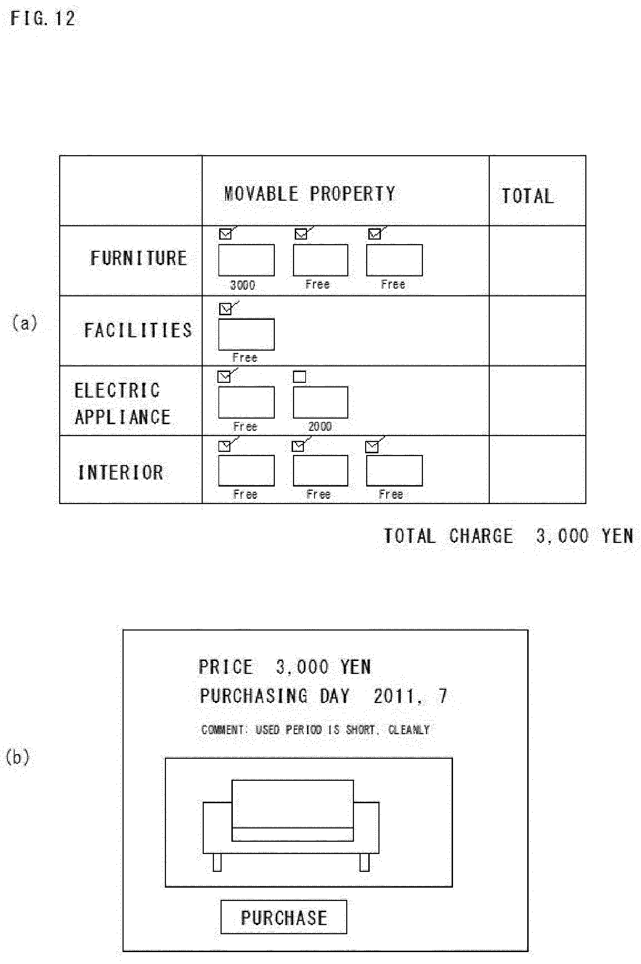

Fig. 12 shows an example of the above-mentioned movable properties list. As shown in Fig. 12(a), the movable properties list is divided into categories separately. For example, it is classified and displayed into items, such as furniture, IT, interior products, exterior products, vehicles, small articles, facilities, etc. The display for each of the movable properties is given as photographs and a trade name of the corresponding movable property. For example, in the case when a sofa is registered in the classification of furniture, the photograph, title "sofa for two persons" and price thereof are displayed. When the photograph or title of this sofa is clicked, detailed information of the corresponding sofa is displayed on the screen of the client of the person planning to move into the property, as shown in Fig. 12(b). As the detailed information, comments, such as "used period: one year, with a slight surface stain, which is such an extent as not to bother so much", or the like, are displayed. On the movable properties list, for example, a check button is displayed in the vicinity of each of the photographs, and the total price of movable properties of the checked photographs is displayed on a total payment column.

In the case when the corresponding property is registered in the property profile registering unit 11, with a salon being generated, and when any topic is opened by the salon member, one portion or the entire portion of the topic can be viewed by a person planning to move into the property. The setting for allowing the view thereof maybe made by allowing the salon member to push an agreement button. Alternatively, topics may be generated under a browsable condition from the first time. By browsing the corresponding topic, the person planning to move into the property is allowed to obtain live information about a property that he or she thinks about living therein. For example, in the case when a property for sale is registered in the property profile registering unit 11, with topics about a neighborhood supermarket being browsable, since the person planning to move into the property can easily imagine a state after entering the property, it becomes possible to easily judge the value of the property more specifically.

The mail transmitting/receiving unit 304 mediates mail exchanges between the client of a tenant and the client of a person planning to move into the property. Additionally, as the mail format, a conventionally known format, such as a chat type, a time-line type or the like, may be adopted. The tenants register their contact destinations, such as mail addresses and the like, in the property registering unit 302. In the mail address, all pieces of information (ID's, handle names, or the like) that specify a tenant and a person planning to move into the property to get in touch therewith are included. By pressing a contact button displayed on the property page, the person planning to move into the property is allowed to move to a mail transmission screen. When the person planning to move into the property inputs information, such as a question or the like, in the contact column of the mail, and presses a transmission button on the mail transmission screen, the information is transmitted to the mail address registered by the tenant. Alternatively, the fact of the transmission of the mail by the person planning to move into the property is transmitted to the corresponding main address as a notification mail.

The tenant accesses to the mail transmitting/ receiving unit 304, and confirms the massage from the person planning to move into the property. Upon responding to this mail, by giving an input to a response column and pressing the transmission button, the response is sent to the mail address preliminarily registered by the person planning to move into the property. By repeating these processes, the tenant and the person planning to move into the property are allowed to get in touch with each other repeatedly.

In the case when an agreement about a purchase or rent has been made between the tenant and the person planning to move into the property, the reporting unit 305 reports the managing company of the property about the agreement formation information. The agreement formation information includes, for example, pieces of information, such as names, addresses and contact destinations of the related persons, selling/purchasing price of the property, movable properties to be sold and the total price thereof, moving day and move-in day, etc. The reporting destination may be preliminarily registered by the tenant, or may be determined by the administrator of the server.

Based upon the information reported by the reporting unit 305, the managing company carries out intermediary businesses, such as a contract action or the like. Since all of these processes are carried out by specialists, the tenant and the person planning to move into the property can carry out selling/buying businesses or rental business safely. In the case of the rental business, since the contract is made between the person planning to move into the property and the property owner, the contents of the agreement formation only indicate that the lesser has found the lessee by himself or herself. Moreover, in the case of the rental business, the range of matters that can be freely determined by the tenant is narrow. For this reason, it is determined that no negotiations can be made about the rent or the like of the property. More specifically, in the case of the rental property, no input column for the rent is formed in the property registering unit 302. Moreover, basic rental information (such as contract period, update, guarantee, or the like) is displayed. The tenant receives the sale price of the movable properties. Additionally, in the case when no rental contract is made between the property owner and the person planning to move into the property, the sales contract of movable properties may be cancelled.

Upon receipt of the report of the agreement formation, the managing company carries out office work procedures on paper basis, such as contract papers or the like. Since the managing company only carries out the office work procedures, with most of the agreements being formed by the salon server, the efficiency of the job becomes very good. Therefore, the managing company may give money or points to the tenant and the person planning to move into the property as rewards. These points are desirably prepared as T-points (registered trademark) or the like that have been generally circulated.

Moreover, the salon members can browse the contents registered in the movable properties list. The movable property information registering unit 303 publishes the registered contents of movable properties to the members of the salon to which the tenant belongs. Since the salon members are on principle tenants of the same property, they are suitable for buying large-size movable properties, such as furniture or the like. That is, it is easy for them to come and see the real item and also to carry the item. For this reason, the salon member can give check marks to the movable properties list so as to buy the items. Upon buying the item, mail exchanges with the tenant are carried out by the mail transmitting/receiving unit 304. Moreover, the time from which the salon members are allowed to freely view the contents may be limited to, for example, one month before the moving day from the property, or the like.

Furthermore, in the case when, although registered contents of movable properties have been published to the salon members of the corresponding property for a predetermined period of time, no one wants to buy them, the registered contents of movable properties may be published to salon members of another property. For example, although the publishing thereof is carried out to the salon members of the same property from one month before the moving day, the publishing to salon members of another property may be set to two weeks before the moving day. While publishing to the salon members of another property, the publishing to the salon members of the same property may be continuously carried out simultaneously. Additionally, the other property to which the publishing is made is desirably limited to a property located within a predetermined distance from the property of the corresponding tenant. Moreover, for other properties, the publishing may be carried out step by step. For example, from three weeks before the moving day, the publishing is expanded to the property closest to the property of the tenant, and from two weeks before the moving day, the publishing may be expanded to the second to the fifth closest properties, and from one week before, the publishing may be expanded to the sixth to the tenth closest properties.

Furthermore, in the movable property information registering unit 303, as the moving day comes closer, the prices registered in the respective movable properties lists may be lowered. The tenant may set a reduction rate for each of the movable properties. For example, in the case of moving in a month, the setting may be made so as to reduce the price by 25% for each week. The reduced price is automatically published. As described above, in the case when no selling is available to the salon members of the same property, the price may be reduced down to free of charge, or the corresponding item may be given as a gift.

Furthermore, when the transfer of a movable property has been reached, and a selling/buying contract or a rental contract has been reached, the person planning to move in is allowed to live in the property in a "so-called with its stock and goodwill" state. Thus, the person planning to move into the property can enter the property without time-consuming troublesome processes, such as purchasing movable properties or the like. Moreover, the tenant can dispose the movable properties and also save time-consuming processes for moving the corresponding movable properties so that this process is very convenient for the tenant.

In the case when the person planning to move into the property has obtained movable properties, and purchased the property in the state with its stock and goodwill, it is necessary to temporarily store the movable properties in another place, if he or she tries to reform the interior of the property. For example, a warehouse enterprise designated by the administrator of the server provides such a place. The warehouse enterprise designated by the administrator takes care of the movable properties for the reforming period of the property, and temporarily stores them in a warehouse or the like of the enterprise. After completion of the reforming process, the warehouse enterprise again transports the entrusted movable properties to the property. The warehouse enterprise is preliminarily registered in the property intermediary unit 301 as a list, and upon request from the client of the person planning to move into the property, or the tenant, the list thereof is displayed on the clients of these. The tenant or the person planning to move into the property selects a specific warehouse enterprise and gets in touch therewith. Since the warehouse enterprise preliminarily has a contract with the administrator of the salon server, jobs are smoothly carried out from the request to the execution of the processes, and the tenant makes it possible to save time-consuming processes required for finding out a warehouse enterprise for satisfying the need of such a temporarily deposition of movable properties.

### [Contract Cancellation]

The above-mentioned selling/purchasing contract and rental contract may be cancelled in some cases. For example, although the person planning to move into the property preliminarily acquires live information of the corresponding property based upon information of the salon and the presence of movable properties, a cancellation occurs when the information of the salon is wrong or fake information is displayed, with the result that the actual property is greatly different from the preliminary information. In the case when the contract is cancelled, since the legal duty for recovering the original status is raised, the person who was planning to move into the property has a duty for returning the acquired movable properties to the tenant. In this case, the original tenant, the person who was planning to move into the property, or the administrator carries out a process for cancelling the contract by using a cancellation processing unit 308.

In the case of a selling/purchasing contract, the ownership of the property is returned to the tenant when the contract is cancelled. Moreover, in the case of the rental contract, the ex-tenant might not move at the time of the cancellation of the person who was planning to move into the property. In this case, the ex-tenant is allowed to use the property intermediary unit 301 by the cancellation processing unit 308, and he or she is again treated as the tenant. Then, he or she again registers this property in the property registering unit 302, and tries to sell the property to another person planning to move into the property by using the same sequence of processes as described above. Moreover, since the ownership of the movable properties is also returned to the tenant, he or she again registers the movable properties in the movable property registering unit 303, and tries to sell the movable properties to a person planning to move into the property in the state with its stock and goodwill by using the same sequence of processes as described above. Thus, the tenant can sell the corresponding property again in the so-called state with stock and goodwill, under good conditions through the property intermediary unit 301.

Moreover, in the case of a rental contract, the ex-tenant might have moved out at the time of the contract cancellation. In this case, the owner having an ownership of the property (including a broker or a representative thereof) may carry out processes after the cancellation. The corresponding owner is permitted to use the property intermediary unit 301 by the cancellation processing unit 308, and again registers the property in the property registering unit 302, and tries to rent the property to another person planning to move into the property by using the same sequence of processes as described above. On the other hand, since the ownership of movable properties is returned to the ex-tenant, the ex-tenant is permitted to use the property intermediary unit 301 by the cancellation processing unit 308, and tries to sell the movable properties to another person planning to move into the property by using the same sequence of processes as described above. Additionally, in the case when the owner of the movable properties is the owner of the property, the owner rents the corresponding property to a person planning to move into the property in the state with stock and goodwill by using the same sequence of processes as described above. Thus, the owner can again rent the property in the so-called state with stock and goodwill, under good conditions through the property intermediary unit 301.

Moreover, the original person who wanted to move into the property can select the way how to cancel the contract of movable properties by using the cancellation processing unit 308. By providing a temporary ID for allowing the person who was planning to move into the property to use the property intermediary unit 301, the cancelation processing unit 308 permits he or she to use the property intermediary unit 301 for selling. After the person who was planning to move into the property has been allowed to use the property intermediary unit 308, upon receipt of a request from the client of the person who was planning to move into the property, it allows the client to display a screen for use in determining the method for carrying out a cancelling process so as to display a "resell" or "possess" button on the cancellation processing screen. In the case of the "resell", in parallel with the property selling by the ex-tenant, the person who was planning to move into the property sells the movable properties located in the property.

In the same manner as described above, the original person who was planning to move into the property registers movable properties in the movable property information registering unit 303 so as to sell them. Mail exchanges to and from a purchaser are carried out by the mail transmitting/receiving unit 304. Since the cancellation processing unit 308 gives a temporary ID to the original person who was planning to move into the property, the mail transmitting/receiving processes to and from the purchaser are carried out by using this ID. Thus, the original person who was planning to move into the property can sell movable properties independently, and the ex-tenant can also sell the property in the state with stock and goodwill. Of course, in the case when the movable properties cannot be sold to another person planning to move into the property, they can be sold to another salon member by using the same sequence of processes as described above.

Next, when the "possess" button is pressed, the original person who was planning to move into the property, as he is or she is, becomes the owner (selling/purchasing contract of movable properties is not cancelled, or the selling/purchasing contract is newly concluded between the concerned persons after the cancellation). At this time, the cancellation processing unit 308 allows the client of the person who was planning to move into the property to display a list of moving enterprises and warehouse enterprises designated by the administrator. The person who was planning to move into the property selects a specific moving enterprise to move the movable properties to a desired place or to store them in a warehouse of a warehouse enterprise designated by the administrator. Since the moving enterprise and managing enterprise designated by the administrator preliminarily has a contract with the administrator so as to temporarily store movable properties, jobs are smoothly carried out from the request to the moving and storing operations.

Moreover, in the case when none of the ex-tenant, the owner and the person planning to move into the property want to again carry out the selling procedure of movable properties, the administrator of the salon server may carry out the selling procedure independently. By allowing the administrator to press a "sale consignment" button in the cancellation processing unit 308, the administrator can sell the movable properties by using the property intermediary unit 301 in place of the tenant. The fact that the sale consignment is carried out by the administrator may be preliminarily included in the use permission conditions of the salon member. Since the selling procedure thereafter is the same as that of the tenant, the explanation thereof will be omitted.

Moreover, the tenant may inquire the managing company about a property of the next moving destination. Together with the aforementioned reporting unit 305, a consultation unit 306 to the managing company is installed in the salon server. The consultation unit 306 transmits the profile of the property where the tenant is currently living to the client of the managing company. Based upon the property profile, the managing company introduces a property that is thought to be best suited for the tenant to the tenant as the moving destination (there are many accessing methods from the managing company to the tenant, such as telephone calls, mails and the like). Moreover, in the case when the managing company can access to the salon to view the hobbies or the like of the corresponding tenant, the information of the salon may be used for a reference upon selecting the property of the moving destination. Furthermore, based upon the above-mentioned sold movable properties and the remaining movable properties, the reference for use in selecting the property of the moving destination may be prepared.

In the case when the tenant consults the client of the managing company, the reward for the acquired consultation may be charged on the managing company. More specifically, a charging unit 307 is installed in the consultation unit 306. As the charging method, for example, the charging unit 307 may automatically draw the corresponding reward from the payment bank account of the managing company. Alternatively, by using a point service system to which the administrator of the salon server and the managing company join, the reward may be paid by the corresponding points.

Although the above description shows a case in which movable properties are sold or transferred, the movable properties may be rented. In this case, it is only necessary to switch the aforementioned sale price to the rental price. The corresponding rental price may be displayed as a monthly charge. Moreover, the process in which, when a selling/ purchasing agreement or a rental agreement is made between the tenant and the person planning to move into the property, the agreement formation information is reported to the managing company of the corresponding property may be omitted in the case when the tenant and the person planning to move into the property directly conclude a contract.

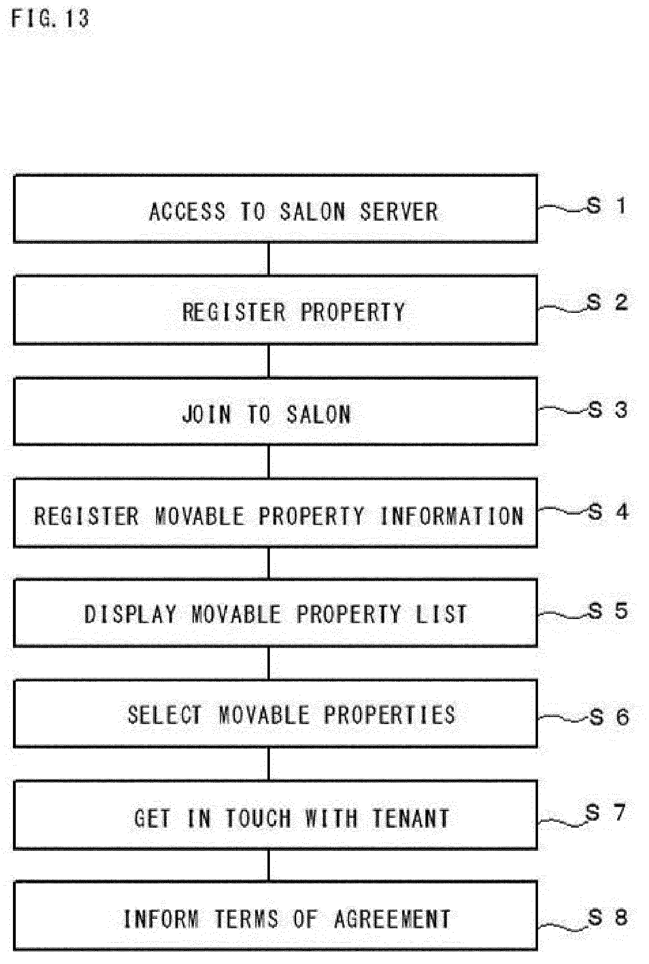

Next, the following description will explain one example of a function of the property intermediary unit 301 by exemplifying sales of apartment houses. Fig. 13 is a flow chart showing the sales of apartment houses. A tenant A thinks about selling one room of his or her own apartment house. The tenant A finds the property intermediary unit 301 of the salon server by browsing Web sites or the like, and accesses to the salon server from his or her own client (access to the salon server: step S1).

The property intermediary unit 301 of the salon server transmits a registering screen for properties to the client of the tenant A. The tenant A inputs the property profile to the input column of the registering screen. The items inputted are the address, structure, age, rent, room layout, additional facilities and reform history of the property. Next, photographs and motion pictures of the property and comments related to the property are inputted. Thus, the corresponding property is registered in the property registering unit 302 so as to allow a person planning to move into the property, that is, the third party, to view the property (registration of property: step S2).

Moreover, on the registering screen of the client of the tenant A, a button for use in registering the corresponding property in the property profile registering unit 11 of the salon server is displayed. In order to transmit live voice of residents to the person planning to move into the property, the tenant A tries to register the property in the property profile registering unit 11 of the salon server. When the button is pressed, the information registered in the property registering unit 302 is registered in the property profile registering unit 11. Since salons have already been formed by other tenants with respect to this property, the tenant A is automatically registered in the salon member registering unit (joining to salon: step S3). In this state, the tenant A is allowed to join topics within the salon.

Among these topics, there is a topic of "nursery facilities", with such a setting as to be published being prepared. The salon members, that is, residents of this property, have given various comments about this topic of "nursery facilities". The presence of this topic is displayed as the title of voice of residents or the like so that in the case when a person planning to move into the property views the properties registered in the property registering unit 302, the presence of this topic can be easily found by such a person, and the person can be introduced to the page of this topic.

Additionally, in the case when the property of the tenant A is not registered in the salon server, by allowing the tenant A to register the property in the property profile registering unit 11, leaflets are generated by the sequence of processes of the embodiment, and by allowing a plurality of people to join thereto, a salon is formed, with topics being formed therein. These topics can be viewed by those persons planning to move into the property.

Moreover, although the tenant A owns his or her beds and sofas, these items are disused in the next moving destination because new ones will be purchased. Furthermore, although he or she installed an air conditioner at his or her own expense, the person thinks that since buying a new product can save more money with higher security, rather than disassembling and moving it, the air conditioner should be left as it is. On the other hand, there are a wood deck and a warehouse ordered as being made of water-proof lumber on a balcony, and these are very difficult to move. There is also a large-size television. For this reason, in order to sell these movable properties to the next tenant, the tenant A registers these movable properties in the movable property information registering unit 303 (registering movable property information: step S4). The tenant A takes photographs of these movable properties, and pastes these to a registering screen transmitted from the movable property registering unit 303. Moreover, on a comment column, comments about the respective movable properties are written. For example, about the bed, the following comment is put: "product of a popular brand, bought three years ago. Good appearance." Furthermore, the tenant A puts a price of 8000 yen for the sofa and a price of 3000 yen for the large-size television, with the other movable properties being free of charge.

The movable property information registering unit 303 forms a list of the registered movable properties, and upon request from a client of a person planning to move into the property, displays the list on the screen of the client (displaying list of movable properties: step S5).

A certain person B planning to move has been looking for a property to newly move thereto. He or she finds the property intermediary unit 301 by retrieving the Web, and browses the site by accessing thereto through his or her client. As a result, since the person B planning to move has found a desirable property, he or she views the detailed information of the property. At this time, he or she finds a portion where voices of the tenants can be browsed, and moves to the page of topics of the property salon. The person B planning to move into the property is allowed to find live information about the property which would not be found by a normal property retrieving site, from the contents of the topics. The person B planning to move into the property has a young child and wants to put the child into a nursing facility and work out. In the salon of the property, since the topic of "nursery facilities" is prepared to be published, she browsed the topic. Thus, she is allowed to know actual circumstances, evaluations, and the like of nursery facilities on the periphery thereof.

Next, the person B planning to move into the property wants to cut costs of furniture and additional facilities as much as possible since the move causes much money. At this time, the movable property information registering unit 303 transmits the movable property list to the client so as to be displayed thereon. The person B planning to move into the property views the movable property list and selects items she wishes to own (selecting movable properties: step S6). The person B planning to move into the property considers that the bed, sofa, wood deck, warehouse and air conditioner are necessary, and by clicking the photographs of these, she confirms the detailed information of the movable properties, and gives check marks to all of these. However, she thinks that the large-size television is unnecessary because she has her own television so that no check mark is given thereto.

When check marks are put in the movable property list, the total price can be confirmed. Since the total price is very cheap, the person B planning to move into the property pushes the purchase confirmation button, as it is, to be concluded. The total price is reflected to the purchase price of the property. The tenant A makes it possible to cut time-consuming movable property disposing processes and the cost thereof.

Next, the person B planning to move into the property gets in touch with the tenant A by using the function of the mail transmitting/receiving unit (getting in touch with the tenant: step S7). At this time, since the person B planning to move into the property wishes to preliminarily view the actual property, she makes a request for preliminarily viewing the property by introducing herself in the contents of the mail, and the tenant A agrees to this. After these mail exchanges, the preliminary viewing of the actual property, and the like, the person B planning to move into the property decides to purchase the property. The two parties have reached an agreement about the price of the property, and the transferring date and the like are also determined.

The procedures up to this are items that have to be agreed between the concerned persons. Thereafter, registering official jobs by a judicial scrivener and management contracts or the like by the managing company, which are complex procedures for those who are not specialists, need to be executed. For this reason, the tenant A writes the contents of the concluded agreement in the reporting unit 305, and transmits these to the client of the managing company (reporting agreement items: step S8).

Based upon the agreement formation thus received, the managing company writes predetermined items in a prescribed form of a selling/buying contract, and also prepares management contracts, such as management regulations or the like, together with power of attorney or the like for entrusting the transfer registration work to a predetermined judicial scrivener. These processes are executed by posting mails and face-to-face meetings. Thus, the transfer registration is successfully completed, and the transfer of the property is carried out.

The managing company has joined to the T-point (registered trademark) system, and can give T-points to customers. Since the transfer is smoothly executed, without requiring any labor up to the agreement formation between the concerned parties, it is possible to reduce work loads and cut costs. In order to return one portion of this to the concerned parties, the managing company gives T-points to the concerned parties. Additionally, the managing company may be a real estate agent. The concerned parties require no real estate intermediary fees so that considerable cost-reduction effects are achieved. The person B planning to move in can purchase a property based upon live information about the property, and obtain movable properties at low costs so that she is satisfied. The tenant A can cut time-consuming procedures and costs of disposing the movable properties, and sell them at higher prices than usual market prices because of the reduction of the intermediary agent fees. On top of that, he or she has a good feeling because he or she has sold the properties to which he or she is attached to the reasonable person.

On the other hand, the tenant A has the large-size television left without being sold. The members of the salon to which the tenant A belongs can view the contents of the movable property information registering unit 303 and purchase this. Another tenant C, who has wanted a large-size television, accesses to the movable property information registering unit 303, and enters a check mark to the movable property list so as to apply for confirming the actual item to the tenant A. Since the tenant C is a resident of the same property, he or she can confirm the actual item immediately. Then, he or she determines to buy the item, and concludes the transaction by pressing the purchase button. Thus, the large-size television is erased from the movable property list, or is displayed as "being sold out". Since they are the residents of the same property, the transporting process of the large-size television is immediately completed. Thus, the tenant A can dispose all the disused movable properties.

Next, in the case when upon getting a question from a person planning to move into the property, the tenant cannot answer the question, the corresponding tenant can ask another salon member to answer the question. The property intermediary unit 301 is provided with a means for receiving a mail from a person planning to move into the property and for transmitting the mail to a tenant or displaying the mail to the tenant. For example, the corresponding mail is displayed on the client of the tenant. In the case when the tenant reads the message and the contents thereof include what the corresponding tenant cannot answer, the tenant may ask another salon member to reply the message. The property intermediary unit 301 is provided with a reply asking means, and the replay asking means has a function for transferring the mail to another salon member. The transferring destination or the like of the other salon member is registered in the salon registering unit. Since the salon member has his or her life region in the same area, it is possible to obtain a practical answer in many cases by asking the other salon member to reply about a question in the neighborhood. When the other salon member gives an answer to the mail, the history of the reply is stored in association with the corresponding person planning to move into the property. When the person planning to move into the property actually moves to the property, the corresponding other salon member is allowed to get a reward in a certain form because of the cooperation to obtaining the tenant. For example, the reward is given as T-points or the like.

For example, suppose that a tenant is a single person and that a person planning to move into the property is a woman with a small child, and suppose that the person planning to move into the property asks the tenant "how about the vacancy state of neighboring nursery facilities?". Since the tenant does not have such information, the reply asking means asks another salon member who has a small child to reply to the question. At this time, the reply asking means may designate another salon member, or may automatically extract another salon member to ask the question based upon the information in the salon registering unit, and may send a mail for asking the replay to the corresponding other salon member. When the corresponding other member gives a reply to the person planning to move into the property, this reply is stored as history in the reply asking means. Thereafter, when the person planning to move into the property actually moves to the property, the corresponding other salon member is allowed to get points as being determined based upon the history information that he or she has cooperated with the brokering of the property.

### DESCRIPTION OF REFERENCE NUMERALS

- 100: salon server
- 101: salon registering unit
- 102: salon managing unit
- 103: salon marketing unit
- 104: server managing unit

### [FIG. 1]

### SALON SERVER

- 101: SALON REGISTERING UNIT
- 105: INPUT UNIT
- 106: IMAGE DISPLAY UNIT
- 11: PROPERTY PROFILE REGISTERING UNIT
- 12: ENTERPRISE REGISTERING UNIT
- 13: LEAFLET GENERATING UNIT
- 14: ENTERPRISE SELECTION UNIT
- 15: ORDERING UNIT
- 16: SALON MEMBER REGISTERING UNIT
- 17: SAMPLE STORAGE UNIT
- 18: ENTERPRISE COMBINATION UNIT
- 19: JOB COUPLING UNIT
- 102: SALON MANAGING UNIT
- 21: SALON GENERATING UNIT
- 22: SALON SETTING UNIT
- 23: LOG ACQUIRING UNIT
- 24: SALON COUPLING UNIT
- 25: RECOMMEND GENERATING UNIT
- 26: ESTIMATION UNIT
- 103: SALON MARKETING UNIT
- 31: MARKETING ENTERPRISE REGISTERING UNIT
- 32: MARKETING-USE RECOMMEND GENERATING UNIT
- 33: MARKETING ESTIMATION UNIT
- 34: MARKETING INFORMATION STORAGE UNIT
- 104: SERVER MANAGING UNIT

### LEAFLET DATA INDICATION INFORMATION

ORDERING PAPER
PRINTING ENTERPRISE CLIENT
POSTING ENTERPRISE CLIENT
LEAFLET

### REGISTRATION APPLICATION ENTRANCE SCREEN

- 91: SALON MEMBER CLIENT
- 92: ENTERPRISE CLIENT

### [FIG. 2]

SALON INTRODUCTION T1
NOTICE TO TENANTS T2
ACCESS INFORMATION T3
NINATO MIRAI DISTRICT
MACHIKOE
DISPLAY COLUMN OF PROPERTY
BAR CODE/TWO DIMENSIONAL CODE
MAIL ADDRESS
URL

### [FIG. 3]

SALON SERVER
PRINTING ENTERPRISE A
PRINTING ENTERPRISE B
POSTING ENTERPRISE A
POSTING ENTERPRISE B
PROPERTY C
FIRST JOB
SECOND JOB
PROPERTY A
PROPERTY B
1 to 3 BUILDINGS
4 AND 5 BUILDINGS
POSTING ENTERPRISE C

### [FIG. 4]

- S1: REGISTER PROPERTY
- S2: AUTOMATICALLY GENERATE LEAFLETS
- S3: SELECT ENTERPRISE
- S4: TRANSMIT LEAFLET DATA

### [FIG. 5]

BAKERY
CAFÉ
SCHOOL
PROPERTY A
PROPERTY B
[FIG. 6]
SALON MEMBER
PROFILE 2DK TENNIS 1K MOTORCYCLE 2DK TENNIS
COMMON SCREEN MESSAGE NEWS
RECOMMEND SCREEN CAFÉ TENNIS
JOINED SALON TENNIS

### [FIG. 7]

S A
S B
PROPERTY A
PROPERTY B
CAFÉ

### [FIG. 9]

MARKETING BASED UPON RESTAURANTS
SALON SERVER
PRINTING ENTERPRISE A
POSTING ENTERPRISE A
PROPERTY A
PROPERTY B
POSTING ENTERPRISE B
PROPERTY C
POSTING AREA OF POSTING ENTERPRISE A
POSTING AREA OF POSTING ENTERPRISE B

### [FIG. 10]

### SALON SERVER

- 101: SALON REGISTERING UNIT
- 105: INPUT UNIT
- 106: IMAGE DISPLY UNIT
- 11: PROPERTY PROFILE REGISTERING UNIT
- 12: ENTERPRISE REGISTERING UNIT
- 13: LEAFLET GENERATING UNIT
- 14: ENTERPRISE SELECTION UNIT
- 15: ORDERING UNIT
- 16: SALON MEMBER REGISTERING UNIT
- 17: SAMPLE STORAGE UNIT
- 18: ENTERPRISE COMBINATION UNIT
- 19: JOB COUPLING UNIT
- 102: SALON MANAGING UNIT
- 21: SALON GENERATING UNIT
- 22: SALON SETTING UNIT
- 23: LOG ACQUIRING UNIT
- 24: SALON COUPLING UNIT
- 25: RECOMMEND GENERATING UNIT
- 26: ESTIMATION UNIT
- 103: SALON MARKETING UNIT
- 31: MARKETING ENTERPRISE REGISTERING UNIT
- 32: MARKETING-USE RECOMMEND GENERATING UNIT
- 33: MARKETING ESTIMATION UNIT
- 34: MARKETING INFORMATION STORAGE UNIT
- 104: SERVER MANAGING UNIT

### LEAFLET DATA INDICATION INFORMATION

ORDERING PAPER
PRINTING ENTERPRISE CLIENT
POSTING ENTERPRISE CLIENT
LEAFLET

### REGISTRATION APPLICATION ENTRANCE SCREEN

- 91: SALON MEMBER CLIENT
- 92: ENTERPRISE CLIENT

### PROPERTY PRIFILE REGISTERING UNIT

- 301: PROPERTY INTERMEDIARY UNIT
- 302: PROPERTY REGISTERING UNIT
- 303: MOVABLE PROPERTY INFORMATION REGISTERING UNIT
- 304: MAIL TRANSMITTING/RECEIVING UNIT
- 305: REPORTING UNIT
- 306: CONSULTATION UNIT
- 307: CHARGING UNIT
- 308: CANCELLATION PROCESSING UNIT
- TENANT: CLIENT
- PERSON: PLANNING TO MOVE IN CLIENT

### MANAGING COMPANY CLIENT

### [FIG. 11]

SALON SERVER
TENANT
(PERSON PLANNING TO MOVE IN)
NEW TENANT
(PERSON PLANNING TO MOVE IN)
MANAGING COMPANY
REAL ESTATE ENTERPRISE

### [FIG. 12]

MOVABLE PROPERTY
TOTAL
FURNITURE
FACILITIES
ELECTRIC APPLIANCE
INTERIOR
TOTAL CHARGE 3,000 YEN
PRICE 3,000 YEN
PURCHASING DAY 2011, 7
COMMENT: USED PERIOD IS SHORT, CLEANLY
PURCHASE

### [FIG. 13]

- S1: ACCESS TO SALON SERVER
- S2: REGISTER PROPERTY
- S3: JOIN TO SALON
- S4: REGISTER MOVABLE PROPERTY INFORMATION
- S5: DISPLAY MOVABLE PROPERTY LIST
- S6: SELECT MOVABLE PROPERTIES
- S7: GET IN TOUCH WITH TENANT
- S8: INFORM TERMS OF AGREEMENT

## Claims

1. A property intermediary server comprising:
a property registering unit for allowing a tenant who leaves a property to register the property;
a movable property information registering unit for registering movable properties, such as furniture, an electric appliance and the like, that belong to the registered property; and
a mail transmitting/receiving unit for use in getting in touch with a person planning to move in about the properties or the like registered in the property registering unit.

2. The property intermediary server according to claim 1, further comprising:
a salon generating unit for generating a salon composed of the tenants having common property profiles or common topics based upon the property profiles or topics; and
a log acquiring unit for acquiring a log from a client of each of salon members corresponding to the tenants,
wherein the property information registering unit publishes registered contents of the movable properties to the salon members of the salon to which the tenants belong.

3. The property intermediary server according to claim 2, wherein the movable property information registering unit publishes registered contents of the movable properties to salon members of another property after a lapse of a predetermined period of time.

4. The property intermediary server according to any one of claims 1 to 3, wherein the movable property information registering unit alters prices of the movable properties for each predetermined period of time.
